# EUROPEAN PATENT SPECIFICATION

(11) **EP 3 982 086 B1**
(45) Date of publication and mention of the grant of the patent: **27.08.2025**
(21) Application number: 21189204.7
(22) Date of filing: 02.08.2021
(51) Int. Cl.: G01C 25/00, G05D 1/00, A01B 69/00, A01B 69/04

(54) **APPARATUS TO AUTOMATE MULTI-POINT INERTIAL SENSOR CALIBRATION**
VORRICHTUNG ZUR AUTOMATISIERUNG DER KALIBRIERUNG EINES MEHRPUNKT-TRÄGHEITSSENSORS
APPAREIL POUR AUTOMATISER L'ÉTALONNAGE MULTIPOINT D'UN CAPTEUR INERTIEL

(30) Priority: 08.10.2020 US 202017066205
(43) Date of publication of application: 13.04.2022
(73) Proprietor: Deere & Company, Moline, IL 61265 (US)
(72) Inventor: Barton, Ian M., 68163 Mannheim (DE); Lawson, Joshua T., 68163 Mannheim (DE); Maeder, Curtis A., 68163 Mannheim (DE)
(74) Representative: Holst, Sönke

(56) References cited:
- US-A1- 2018 164 126
- US-A1- 2020 200 566

## Description

This disclosure relates generally to global navigation satellite systems, and, more particularly, to automate multi-point inertial sensor calibration.

### BACKGROUND

Global navigation satellite systems (GNSS) derive position data based on a receiver obtaining signals from a network of satellites. GNSS determine distances between the receiver and different satellites based on how long it takes for the receiver to receive signals from the respective satellites. Thus, in GNSS, the location of the receiver is calculated based on comparing the distances the receiver is from the different satellites. However, the location data determined by the GNSS can become increasingly inaccurate over time based on signal processing delays, satellite clock errors, etc.

Some GNSS (e.g., global positioning system (GPS), etc.) include additional sensors to derive position data (e.g., inertial sensors, altitude sensors, etc.). In some examples, a GPS includes an inertial measurement unit (IMU) that calculates velocity, altitude, position, etc. that can be used in conjunction with the GPS receiver. An IMU includes different inertial sensors to measure linear acceleration, force, angular rate, orientation, etc. of a machine. For examples, the IMU can include accelerometers to measure linear acceleration, gyroscopes to measure rotation rate, magnetometers to measure heading reference (e.g., the angular direction the nose of the machine is facing), etc. In some examples, a GPS receiver can augment position data calculated from the information from the GPS receiver with the measurements from the IMU. In some examples, a GPS receiver uses the IMU data to calculate the position of a machine/device when the GPS receiver is unable to receive GPS signals (e.g., the machine/device is in a tunnel, the machine/device is inside a building, there is electronic interference, etc.). However, inertial sensors are susceptible to accumulating error during operation. The IMU can suffer from accumulating error over a period of time (e.g., due to misalignment of the sensor module, vibration of the machine/device, etc.), which can cause a drift in the measurements (e.g., the IMU measured location is different from the actual location measurement). In some examples, the IMU sensor module misalignment to the machine is recalibrated periodically to correct any error accumulated during operation.

US 2020/0200566 A1 describes a vehicle with automatic steering based on a number of IMU sensors and on a GPS antenna. To calibrate the sensors, the vehicle is automatically driven along a known driving route on a street.

US 2018/0164126 A1 describes calibration of an IMU detecting the roll angle on an agricultural vehicle, wherein the vehicle is automatically driven based on signals from a GPS antenna along a path while the IMU values are recorded. The vehicle is turned around and automatically driven along the same path but in the opposition direction while the sensor values are recorded. From the roll angles and the height of the antenna over ground, average deviations to the side are calculated and used as off track error correction factor for correcting the IMU signals during subsequent operation.

### SUMMARY

The present invention is defined by the claim.

Inertial sensors are automatically calibrated that are used to augment a GPS receiver. Automatic calibration disclosed herein includes driving a machine along a prescribed path that consists of a straight segment with a turn-around at the end. The machine includes automated steering on the prescribed path. The prescribed path is designed so that a machine with automated steering, when navigating the path, will drive in both directions along the straight portion of the path and ensure the machine experiences the same terrain in opposing directions.

A data recorder collects the pitch and roll measurements from the inertial sensor(s) while the machine navigates the prescribed path. After the machine has driven the prescribed path, the pitch and roll measurements are analyzed to determine the bias in the inertial sensor(s) to store the bias as calibrations for the inertial sensor(s). As used herein, pitch measurements refer to rotations of the machine about the y-axis (e.g., the machine rotating forwards and backwards), and roll measurements refer to rotations of the machine about the x-axis (e.g., the machine rotating side to side). In examples disclosed herein, the roll measurements are adjusted for GPS to fixed axle offsets for the machine. The pitch measurements are adjusted for offset of the center point between the front and rear wheels for the machine. The pitch and roll measurements are interpolated to a common distance data set after being adjusted with the offsets for the machine. After generating the common distance based data set, the data (pitch and roll measurements) are compared in pairs based on the entirety of the data. The pitch and roll measurements are analyzed by comparing the created pairs of roll (or pitch) values based on the entirety of the common distance based data set from the prescribed path. The created pairs of roll and pitch values consists of values that were recorded at points along the prescribed path collected in two directions: values from the machine driving in the first direction and values from the machine driving in the second direction (e.g., the opposite direction of the first direction).

Automated driving is used to ensure accurate roll and pitch measurements are collected and recorded for the common distance based data set. In contrast to the systems described herein, user-operated driving can cause the machine to not accurately/consistently follow the prescribed path in the two directions. For example, user-operated driving may cause the machine to deviate from a portion of the prescribed path in the first direction and not deviate from that portion of the prescribed path in the second direction. In this case, the roll (or pitch) measurements in the common distance based data set are not accurate for that portion of the prescribed path because the machine did not drive over the same terrain for the two directions, and the created pair of roll (or pitch) measurements from the common distance based data set for that portion of the prescribed path would not be accurately compared. Automating the driving allows for consistency in the machine following along the prescribed path in both directions. The consistency provided by the automated driving ensures that the machine will navigate the same terrain in both directions along the prescribed path, thus providing accurate roll (or pitch) measurements. Many roll and pitch measurements (e.g., hundreds or thousands of measurements for a prescribed path) from the common distance based data set are analyzed to ensure highly reliable and repeatable outcome is possible for calibrating the IMU sensor module of the machine.

### BRIEF DESCRIPTION OF THE DRAWINGS

FIG. 1 is a schematic illustration of an example environment in which teachings of this disclosure may be implemented.
FIG. 2 is a block diagram of an example inertial measurement unit (IMU) included in the example environment of FIG. 1.
FIG. 3 is a block diagram of an example calibration determiner included in the example IMU of FIGS. 1 and/or 2.
FIG. 4 is an illustration of an example path determined by the example calibration path determiner of FIG. 3 included in the example calibration determiner of FIGS. 2 and/or 3.
FIG. 5 is an illustration of the example user interface included in the example IMU of FIGS. 1 and/or 2 in conjunction with the example sensors interface included in the example IMU of FIGS. 1 and/or 2 and the example calibration initiator included in the example calibration determiner of FIGS. 2 and/or 3.
FIGS. 6A, 6B are illustrations of the example user interface included in the example IMU of FIGS. 1 and/or 2 in conjunction with the example calibration path determiner included in the example calibration determiner of FIGS. 2 and/or 3 to determine a turning path.
FIG. 7 is an illustration of the example user interface included in the example IMU of FIGS. 1 and/or 2 in conjunction with the example calibration path determiner included in the example calibration determiner of FIGS. 2 and/or 3 to obtain information for a calibration path.
FIG. 8 is an illustration of the example user interface included in the example IMU of FIGS. 1 and/or 2 in conjunction with the example calibration path determiner included in the example calibration determiner of FIGS. 2 and/or 3 to determine a calibration path.
FIG. 9 is an illustration of the example user interface included in the example IMU of FIGS. 1 and/or 2 in conjunction with the example automated steerer included in the example calibration determiner of FIGS. 2 and/or 3 to follow a calibration path in a first direction.
FIGS. 10A, 10B are illustrations of the example user interface included in the example IMU of FIGS. 1 and/or 2 in conjunction with the example automated steerer included in the example calibration determiner of FIGS. 2 and/or 3 to monitor the speed of a machine on the calibration path.
FIG. 11 is an illustration of the example user interface included in the example IMU of FIGS. 1 and/or 2 in conjunction with the example automated steerer included in the example calibration determiner of FIGS. 2 and/or 3 to follow a turning path.
FIG. 12 is an illustration of the example user interface included in the example IMU of FIGS. 1 and/or 2 in conjunction with the example automated steerer included in the example calibration determiner of FIGS. 2 and/or 3 to follow a calibration path in a second direction.
FIGS. 13A, 13B are illustrations of the example user interface included in the example IMU of FIGS. 1 and/or 2 in conjunction with the example sensor calibrator included in the example IMU of FIGS. 1 and/or 2.
FIG. 14 is an illustration of the example user interface included in the example IMU of FIGS. 1 and/or 2 in conjunction with the example sensors interface included in the IMU of FIGS. 1 and/or 2.
FIGS. 15A, 15B are illustrations of the example user interface included in the example IMU of FIGS. 1 and/or 2 in conjunction with the example sensors interface included in the IMU of FIGS. 1 and/or 2 to illustrate a selection for calibration with incompatible GPS receivers.
FIG. 16 is a flowchart representative of machine readable instructions which may be executed to implement the example IMU of FIGS. 1 and/or 2.
FIG. 17 is a flowchart representative of machine readable instructions which may be executed to implement the example calibration determiner of FIGS. 2 and/or 3.
FIG. 18 is a flowchart representative of machine readable instructions which may be executed to implement the example automated steerer and the example data recorder included in the example calibration determiner of FIGS. 2 and/or 3.
FIG. 19 is a flowchart representative of machine readable instructions which may be executed to implement the example sensor bias determiner included in the example calibration determiner of FIGS. 2 and/or 3.
FIG. 20 is a block diagram of an example processing platform structured to execute the instructions of FIGS. 15, 16, 17, and 18 to implement the IMU of FIGS. 1 and/or 2 and the calibration determiner of FIGS. 2 and/or 3.

### DETAILED DESCRIPTION

The figures are not to scale. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/- 1 second.

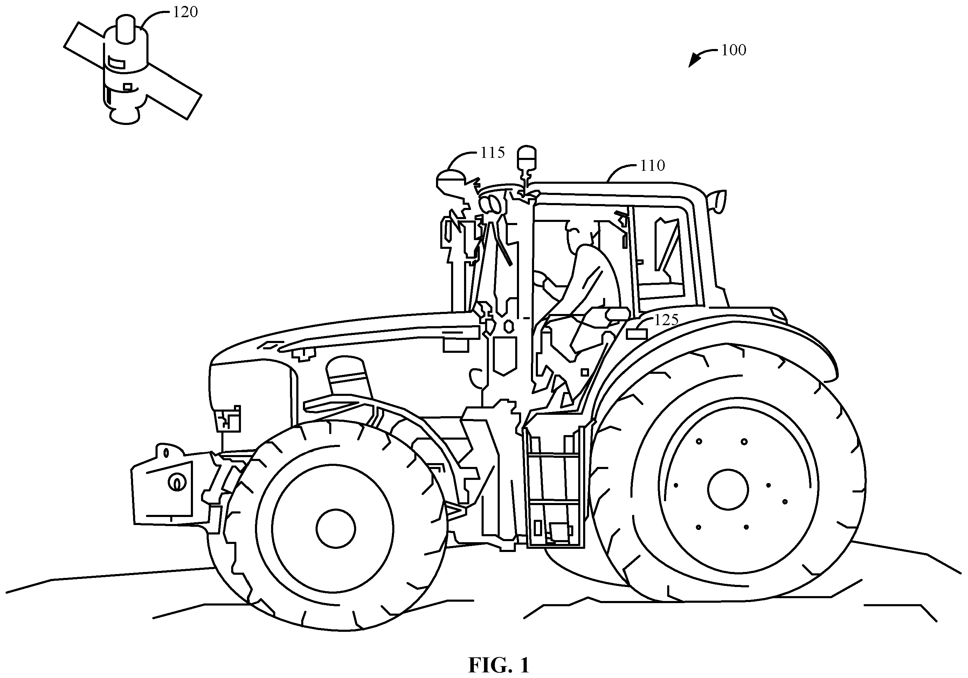

FIG. 1 is a schematic illustration of an environment 100 in which teachings of this disclosure may be implemented. The example environment 100 includes an example machine 110, an example GPS antenna 115, an example satellite 120, and an example inertial measurement unit (IMU) 125.

The machine 110 of the illustrated example of FIG. 1 is an example of a vehicle in accordance with examples disclosed herein. In the illustrated example of FIG. 1, the machine 110 is represented as a tractor, however other vehicles may additionally or alternatively be included. The machine 110 is able to move between different locations and over different terrain. The machine 110 includes the GPS antenna 115 and the IMU 125.

The GPS antenna 115 of the illustrated example of FIG. 1 determines current location data for the machine 110 using the example satellite 120. The GPS antenna 115 receives signals from the satellite 120. The GPS antenna 115 determines the amount of time it took for the GPS antenna 115 to receive the signal from the satellite 120. The GPS antenna 115 determines the current location data based on a calculated distance from the satellite 120 using the amount of time to receive the signal. The GPS antenna 115 receives signals from a network of satellites that include the satellite 120. The GPS antenna 115 determines the current location data based on comparing the distances from the different satellites in the network.

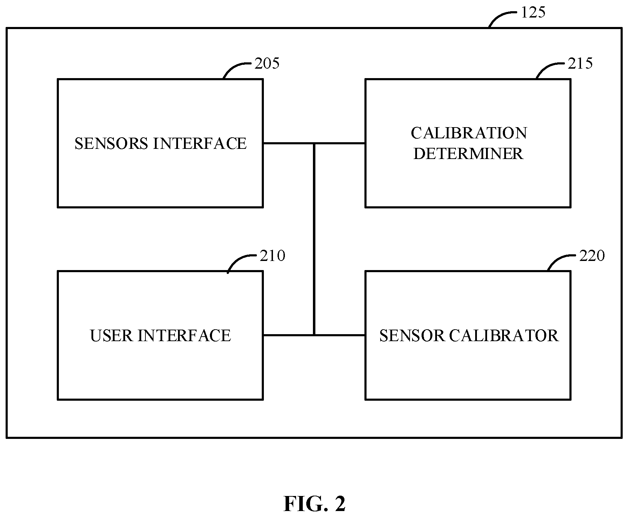

The IMU 125 measures and calculates linear acceleration, rotation, positions, etc. for the machine 110. The IMU 125 includes inertial sensors (e.g., accelerometers, gyroscopes, magnetometers, etc.) to measure the linear acceleration, rotation rate, heading reference (e.g., the angular direction the nose of the machine is facing), etc. for the machine 110. The IMU 125 measurements are used to augment to location data derived from the GPS antenna 115. In some examples, location data determined by the GPS antenna 115 is adjusted to account for the IMU 125 measurements such as, linear acceleration, rotation, etc. For example, if the machine 110 is moving forward, the inertial sensors included in the IMU 125 will measure the acceleration, and these measurements can be used to adjust the location data determined by the GPS antenna 115. The inertial sensors of the IMU 125 accumulate errors during operation. The IMU 125 adjusts/calibrates the inertial sensors to account for these errors. An example implementation of the IMU 125 is described below in conjunction with FIG. 2.

FIG. 2 is a block diagram of an example IMU 125 included in the example environment of FIG. 1. The IMU 125 of FIG. 2 includes an example sensors interface 205, an example user interface 210, an example calibration determiner 215, and an example sensor calibrator 220.

The sensors interface 205 of the illustrated example of FIG. 2 obtains data from the inertial sensors of the IMU 125 of FIG. 1. The sensors interface 205 receives the inertial sensors data such as, measurements from the inertial sensors, the types of the inertial sensors (e.g., accelerometer, gyroscope, magnetometer, etc.), the accuracy of the inertial sensors, etc. The sensors interface 205 provides communication between the inertial sensors, the calibration determiner 215, and the sensor calibrator 220. The sensors interface 205 provides the inertial sensors data to the calibration determiner 215. The sensors interface 205 provides communication between the inertial sensors and the sensor calibrator 220 to apply the calibration results to the inertial sensors.

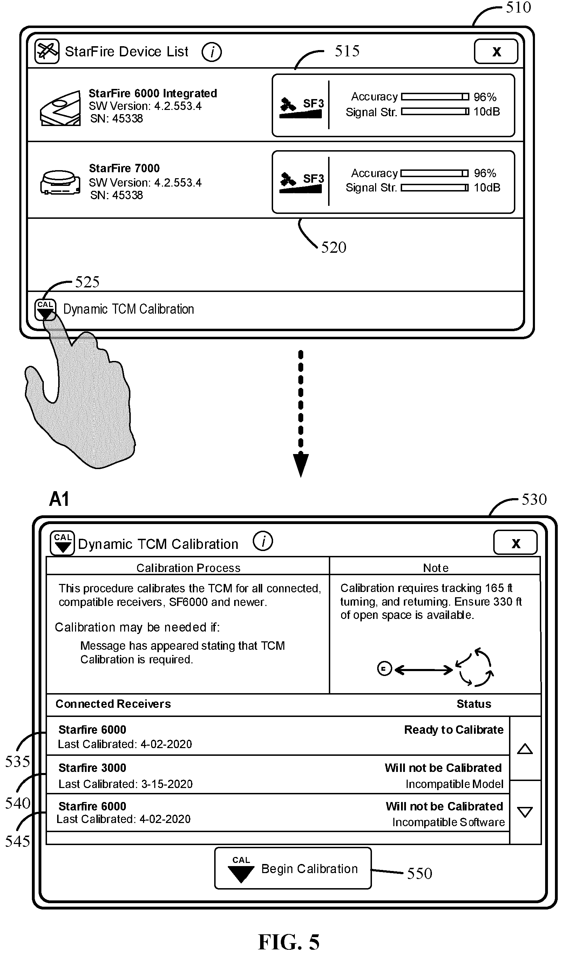

The user interface 210 of the illustrated example of FIG. 2 provides communication between a user of the machine 110 and the calibration determiner 215. The user interface 210 displays information about the calibration of the inertial sensors to the user of the machine 110. For example, the user interface 210 displays the inertial sensors available for calibration. The user interface 210 provides user input to the calibration determiner 215. For example, the user interface 210 determines if the user interface 210 obtains a selection of inertial sensors for calibration from the user, and if the user interface 210 determines that user interface 210 obtains a selection of inertial sensors for calibration, then the user interface 210 provides the selection to the calibration determiner 215. In some examples, the user interface 210 displays to the user of the machine 110 if the calibration of the inertial sensors is successful or not. For example, if the calibration determiner 215 is unable to determine calibration results for the selected inertial sensors, the user interface 210 displays an unsuccessful calibration message to the user of the machine 110. In some examples, if the calibration determiner 215 is able to determine calibration results for the selected inertial sensors, the user interface 210 displays a successful calibration message to the user. Illustrative examples of the user interface 210 are described in further detail below in conjunction with FIGS. 5, 6A, 6B, 7, 8, 9, 10A, 10B, 11, 12, 13A, 13B, 14, 15A, and 15B.

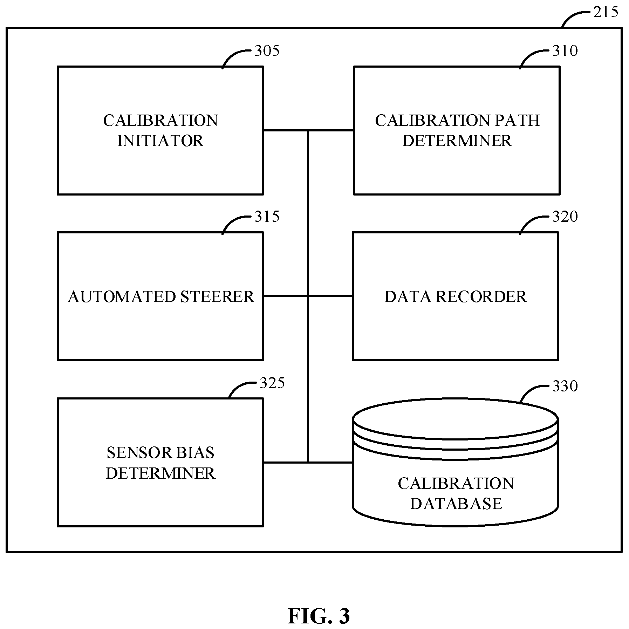

The calibration determiner 215 of the illustrated example of FIG. 2 calibrates the selected inertial sensors from the user interface 210. In some examples, the calibration determiner 215 obtains information needed to calibrate the inertial sensors from user input through the user interface 210. The calibration determiner 215 provides calibration results to the sensor calibrator 220. An example implementation of the calibration determiner 215 is described in further detail below in conjunction with FIG. 3.

The sensor calibrator 220 of the illustrated example of FIG. 2 applies the calibration results from the calibration determiner 215 to the IMU 125. In some examples, the sensor calibrator 220 determines if the calibration performed by the calibration determiner 215 was successful. In some examples, the sensor calibrator 220 obtains the calibration results for the IMU 125 from an example calibration database 330 included in the calibration determiner 215 when the calibration was successful. In some examples, the calibration results include adjustments for the misalignment of the IMU 125 sensor module to the machine 110 (e.g., error values to adjust the inertial sensor measurements of the IMU 125). The sensor calibrator 220 applies the calibration results to the IMU 125 through the sensors interface 205. In some examples, the sensor calibration 220 implements coordinate frames that the IMU 125 sensor module is mount on to apply the calibration results.

FIG. 3 is a block diagram of an example calibration determiner 215 included in the example IMU of FIGS. 1 and/or 2. The calibration determiner 215 of FIG. 3 includes an example calibration initiator 305, an example calibration path determiner 310, an example automated steerer 315, an example data recorder 320, an example sensor bias determiner 325, and an example calibration database 330.

In the illustrated example of FIG. 3, the calibration initiator 305 determines if calibration is initiated by the user of the machine 110. The calibration initiator 305 receives information from the user interface 210 that is indicative of a user selection of inertial sensors for calibration. The user selections of inertial sensors through the user interface 210 indicates to the calibration initiator 305 that calibration has been initiated. In some examples, the calibration initiator 305 begins the calibration of the selected inertial sensors.

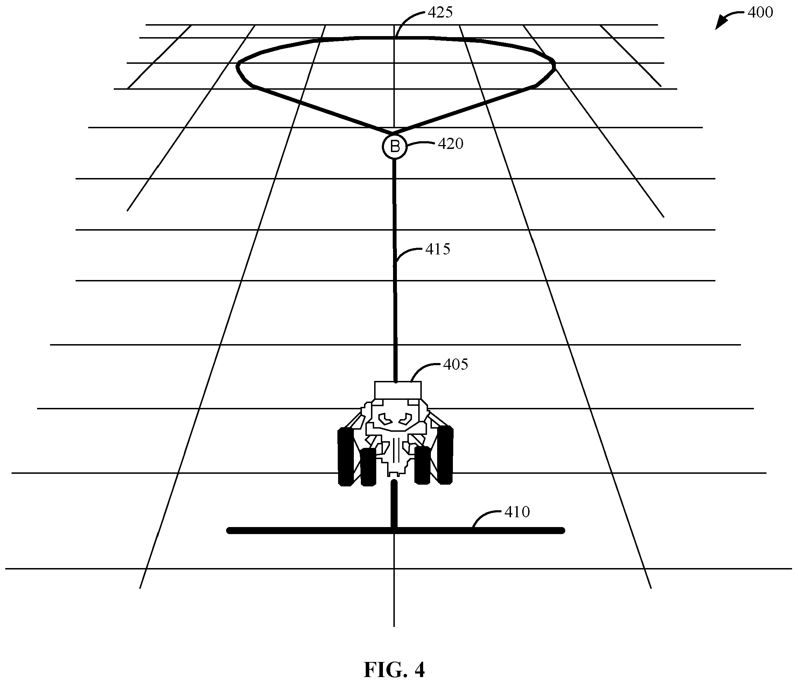

The calibration path determiner 310 of the illustrated example of FIG. 3 determines the calibration path for the machine 110 to follow. The calibration path determiner 310 obtains information from the user of the machine 110 through the user interface 210 to determine the calibration path. The calibration path determiner receives a turn radius for the machine 110 through the user interface 210. In some examples, the calibration path receives a starting point and a heading value for the machine 110 through the user interface 210. In some examples, the calibration path determiner 310 uses baseline values for the turn radius and heading value if the calibration path determiner 310 does not receive user input from the user interface 210. The calibration path determiner 310 determines a calibration line for the calibration path using the starting point. In some examples, the calibration line illustrates the starting point and ending point for collecting and recording measurements along the calibration path. The calibration path determiner 310 determines the calibration line and a turning point on the calibration path for the machine 110 based on the heading value. In some examples, the calibration path determiner 310 determines the calibration line as a straight line of a set distance from the starting point to an ending point in the direction of the heading for the machine 110. In some examples, the set distance is a distance required to collect and record inertial sensor measurements. For example, the set distance can be 48.768 m (160 feet), 60.96 m (200 feet), 80 meters, etc. The calibration path determiner 310 sets the turning point at the ending point of the calibration line. The calibration path determiner 310 determines a turning path for the machine 110 based on the turn radius. In some examples, the calibration path determiner 310 determines the turning path to start and finish at the turning point while accounting for the turning radius of the machine 110. An example calibration path determined by the calibration path determiner is described in further detail below in conjunction with the illustrated example of FIG. 4.

The automated steerer 315 of the illustrated example of FIG. 3 controls the movement (e.g., controls the steering) of the machine 110 on the calibration path determined by the calibration path determiner 310. The automated steerer 315 ensures that the machine 110 follows the calibration path determined by the calibration path determiner 310. The automated steerer 315 does not control the speed of the machine 110 and the user of the machine 110 controls the speed. The automated steerer 315 monitors the speed of the machine 110 along the calibration path. The automated steerer 315 alerts if the speed of the machine goes above a threshold speed. For example, the automated steerer 315 alerts the user if the speed of the machine 110 is above 5 miles per hour. However, other speed thresholds may additionally and/or alternatively be used. The automated steerer 315 controls the movement of the machine 110 to follow the calibration line from the starting point to the turning point. If the automated steerer 315 determines that the turning point has been reached by the machine 110, the automated steerer 315 completes the turn determined by the calibration path determiner 310. However, in some examples, the user of the machine 110 may select to manually complete the turn. The automated steerer 315 controls the movements of the machine 110 to follow the calibration line back from the turning point after completion of the turning path to the starting point. If the automated steerer 315 determines that the calibration line is reached by the machine 110, the automated steerer 315 stops controlling the movement of the machine 110. In some examples, once the machine 110 reaches the starting point of the calibration line, the automated steerer 315 indicates that the calibration path is complete to the data recorder 320 and the sensor bias determiner 325.

The data recorder 320 of the illustrated example of FIG. 3 measures and collects the pitch and roll measurements of the inertial sensors while the automated steerer 315 follows the calibration path determined by the calibration path determiner 310. The data recorder 320 collects and records pitch and roll measurements for the inertial sensors in two directions along the calibration line: the first from the starting point to the turning point, and the second from the turning point to the starting point. The data recorder 320 does not collect or record pitch and roll measurements during the turning path determined by the calibration path determiner 310. The data recorder 320 stops collecting and recording pitch and roll measurements when the machine 110 reaches the turning point at the beginning of the turning path, and the data recorder 320 begins collecting and recording pitch and roll measurements again when the machine 110 reaches the turning point after completion of the turning path. The data recorder 320 collects and records the pitch and roll measurements at a plurality of different locations along the calibration line. For example, the different locations can be every 0.61 m (2 feet) along the calibration line, every one 2.54 cm (1 inch) along the calibration line, etc. The data recorder 320 collects and records pitch a roll measurements for the different locations when the automated steerer 315 directs the machine 110 from the starting point to the turning point and again when the automated steerer 315 directs the machine 110 from the turning point back to the starting point. In some examples, the data recorder 320 collects and records pitch and roll measurements continuously for the different locations along the calibration line. The data recorder 320 adjusts the pitch and roll measurements for offsets for the machine. The data recorder 320 adjusts the pitch measurements for offset differences between the center point between the front and rear wheels of the machine, and the data recorder 320 adjusted the roll measurements for the GPS to fixed axle offset for the machine. After the data recorder adjusts the pitch and roll measurements for offsets, the data recorder 320 generates a common distance based data set of the pitch and roll measurements. The data recorder 320 collects and records the pitch and roll measurements for the inertial sensors through the sensors interface 205. The data recorder 320 stops collecting and recording pitch and roll measurements when the automated steerer 315 indicates that the calibration path is complete.

The sensor bias determiner 325 of the illustrated example of FIG. 3 determines the calibration results for the inertial sensors based on the pitch and roll measurements collected and recorded by the data recorder 320. In some examples, the sensor bias determiner 325 determines if the data collection was successfully completed by the data recorder 320 when the automated steerer 315 indicates that the calibration path is complete. The sensor bias determiner 325 determines the data collection was successful when the sensor bias determiner 325 receives pitch and roll measurements from the data recorder 320 in the common distance based data set. If the sensor bias determiner 325 determines that data collection was successful, the sensor bias determiner 325 determines the calibration results for the IMU 125. The sensor bias determiner 325 collects the common distance based data set of interpolated pitch and roll measurements for the entirety of the calibration line, where the common distance based data set includes the pitch and roll measurements collected when the automated steerer 315 directed the machine 110 from the starting point to the turning point, and from the turning point to the starting point on the calibration line. The sensor bias determiner 325 creates pairs of pitch and roll measurements based on the entirety of the common distance based data set and compares the pairs of pitch and roll measurements to determine the calibration values.

The sensor bias determiner 325 determines calibration values for the inertial sensors based on the comparison of the created pairs of pitch and roll measurements from the common distance based data set. In some examples, the calibration values are percent difference calculations between the created pairs of pitch and roll measurements from the common distance based data set. However, other calculations for determining the calibration values from the comparison of the pitch and roll measurements may additionally and/or alternatively be used. The sensor bias determiner 325 combines the calibration values for all of the created pairs of pitch and roll measurements for each of the inertial sensors. The sensor bias determiner 325 combines the calibration values by averaging the calibration values together. However, other calculation for combining the calibration values may additionally and/or alternatively be used. The sensor bias determiner 325 generates the calibration results for each of the inertial sensors of the IMU 125 based on the combined calibration values. In some examples, the sensor bias determiner 325 stores the calibration results for each of the inertial sensors in the calibration database 330.

The calibration database 330 of the illustrated example of FIG. 3 stores the calibration results for the inertial sensors of the IMU 125 determined by the sensor bias determiner 325. In some examples, the calibration database 330 stores calibration results for a plurality of inertial sensors included in the IMU 125. In some examples, the calibration database 330 provides the calibration results for the plurality of inertial sensors to the sensor calibrator 220 of FIG. 2. The calibration database 330 is implemented by any memory, storage device, and/or storage disc for storing data such as, for example, flash memory, magnetic media, optical media, solid state memory, hard drive(s), thumb drive(s), etc. Furthermore, the data stored in the calibration database 330 may be in any data format such as, for example, binary data, comma delimited data, tab delimitated data, structured query language (SQL) structures, etc.

FIG. 4 is an illustration of a calibration path 400 determined by the calibration path determiner 310 of FIG. 3 included in the calibration determiner 215 of FIGS. 2 and/or 3. The calibration path 400 includes an example machine 405, a starting point 410, a calibration line 415, a turning point 420, and a turning path 425. In the illustrated example of FIG. 4, the machine 405 is the same as the example machine 110 of FIG. 1.

In the illustrated example of FIG. 4, the calibration path determiner 310 determines the calibration path 400 using information from the user of the machine 405. In some examples, the calibration path determiner 310 receives the starting point 410 and a heading value for the machine 110 through the user interface 210. In some examples, the calibration path determiner 310 uses baseline values for the turn radius and heading value if the calibration path determiner 310 does not receive user input.

In some examples, the calibration path determiner 310 determines the calibration line 415 using the starting point 410 and the heading value. In some examples, the calibration path determiner 310 determines the calibration line 415 as a straight line of a set distance from the starting point 410 in the direction of the heading for the machine 405. In some examples, the set distance is a distance required to collect inertial sensor measurements. For example, the set distance can be 48.768 m (160 feet), 60.96 m (200 feet), 80 meters, etc, etc. The calibration path determiner 310 sets the turning point 420 at the end of the calibration line 415 (e.g., at the end point of the set distance).

The calibration path determiner 310 receives a turn radius for the machine 405 from the user. The calibration path determiner 310 determines the turning path 425 for the machine 405 based on turn radius. In the illustrated examples, the calibration path determiner 310 determines the turning path 425 to start and finish at the turning point 420 while accounting for the turning radius of the machine 405.

In the illustrated example of FIG. 4, the machine 405 follows along the calibration path 400 to collect pitch and roll measurements for the calibration of the inertial sensors. The automated steerer 315 of FIG. 3 controls the movement (e.g., controls the steering) of the machine 405 to follow the calibration path 400. The automated steerer 315 controls the movement of the machine 405 to follow the calibration line 415 from the starting point 410 to the turning point 420. If the automated steerer 315 determines that the turning point 420 has been reached by the machine 405, the automated steerer 315 completes the turning path 425 determined by the calibration path determiner 310. However, in some examples, the user of the machine 405 may select to manually complete the turning path 425. The automated steerer 315 controls the movements of the machine 405 to follow the calibration line 415 back from the turning point 420 to the starting point 410. Once the automated steerer 315 determines that the starting point 410 is reached by the machine 405, the automated steerer 315 stops controlling the movement of the machine 405.

FIG. 5 is an illustration of the example user interface 210 included in the example IMU 125 of FIGS. 1 and/or 2 in conjunction with the example sensors interface 205 included in the example IMU 125 of FIGS. 1 and/or 2 and the example calibration initiator 305 included in the example calibration determiner 215 of FIGS. 2 and/or 3. The illustrated example of FIG. 5 includes an example first display 510, which includes an example first entry 515 and an example second entry 520. In the illustrated examples, the user interface 210 displays the first display 510 with the first entry 515 and the second entry 520 information. The first entry 515 and the second entry 520 are representative of different GPS devices (e.g., the machine 110 of FIG. 1) that are available to the IMU 125. In some examples, the first entry 515 and the second entry 520 include information (data) about the respective available GPS devices (e.g., identification information, accuracy, signal strength, etc.). The first display 510 further includes an example calibration menu link 525. The calibration menu button 525 provides a transition to an example second display 530.

In the illustrated example of FIG. 5, the second display 530 illustrates a calibration menu. In some examples, the user interface 210 displays the second display 530 in response to the selection of the calibration menu button 525. The second display 530 includes an example first entry 535, an example second entry 540, and an example third entry 545. The first entry 535, the second entry 540, and the third entry 545 are representative of different GPS receivers (e.g., the GPS antenna 115 of FIG. 1) that are available to the GPS devices included in the first display 510. In some examples, the first entry 535, the second entry 540, and the third entry 545 include calibration information (data) about the respective available GPS receivers (e.g., date of last calibration, calibration compatibility, etc.). In some examples, the user interface 210 receives the information for the first entry 535, the second entry 540, and the third entry 545 from the sensors interface 205. In some examples, the calibration compatibility information indicates if the inertial sensors associated with the GPS receiver are able to be calibrated. In some examples, an entry (e.g., the first entry 535, the second entry 540, and/or the third entry 545) indicates that a GPS receiver is not able to be calibrated when the GPS receiver information indicates an incompatible model (e.g., the GPS receiver model does not include the necessary equipment for calibration), incompatible software (e.g., the software of the GPS receiver is incompatible with the software of the IMU 125 to perform the calibration), or insufficient accuracy (e.g., the accuracy of the GPS receiver does not meet a threshold for the calibration to be initiated). For example, the second entry 540 indicates the GPS receiver will not be calibrated because it is an incompatible model, and the third entry 545 indicates the GPS receiver will not be calibrated because of incompatible software.

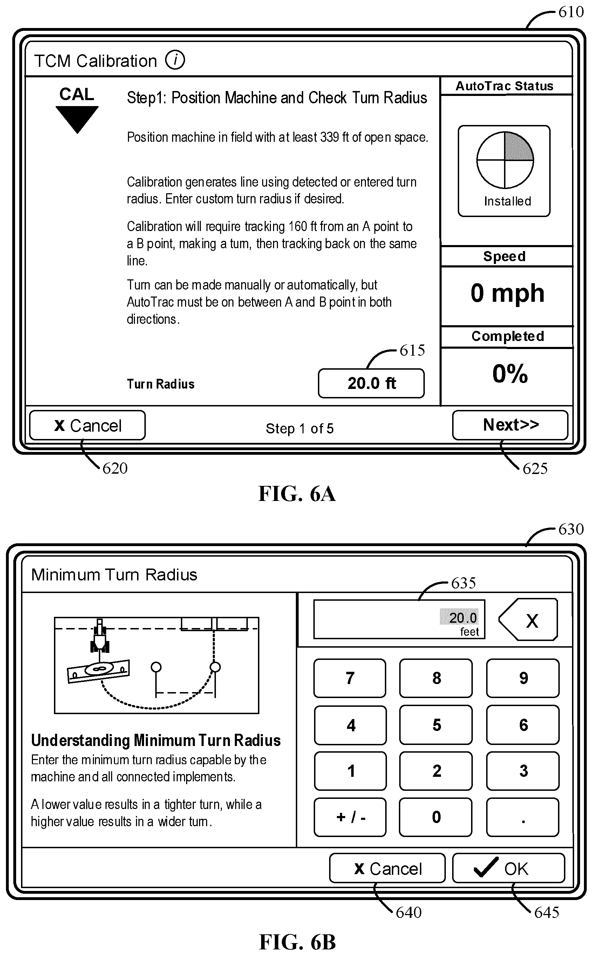

The second display 530 includes an example begin calibration button 550. In some examples, the begin calibration button 550 provides a transition to initiate calibration of the eligible GPS receivers (e.g., the GPS receiver associated with the first entry 535). In some examples, the user interface 210 receives a user selection of the begin calibration button 550 and proceeds to the example illustration of FIG. 6A that is described in further detail below.

FIGS. 6A, 6B are illustrations of the example user interface 210 included in the example IMU 125 of FIGS. 1 and/or 2 in conjunction with the example calibration path determiner 310 included in the example calibration determiner 215 of FIGS. 2 and/or 3 to determine a turning path. The illustrated example of FIG. 6A includes an example display 610. The user interface 210 displays the display 610 in response to a user selection to begin calibration. In some examples, the user interface 210 notifies the calibration path determiner 310 that a user has selected to begin calibration. The display 610 includes information for the calibration path determiner 310 to obtain initial information needed for calibration. The display 610 of FIG. 6A provides information to a user of the user interface 210 for inputting a turn radius for the machine (e.g., the machine 110 of FIG. 1). The display 610 includes an input field 615 for the user to provide the turn radius of the machine. In some examples, the input field 615 is selected by the user to provide a more detailed display about determining the turn radius. The more detailed display from the input field 615 is described in further detail below in conjunction with 6B.

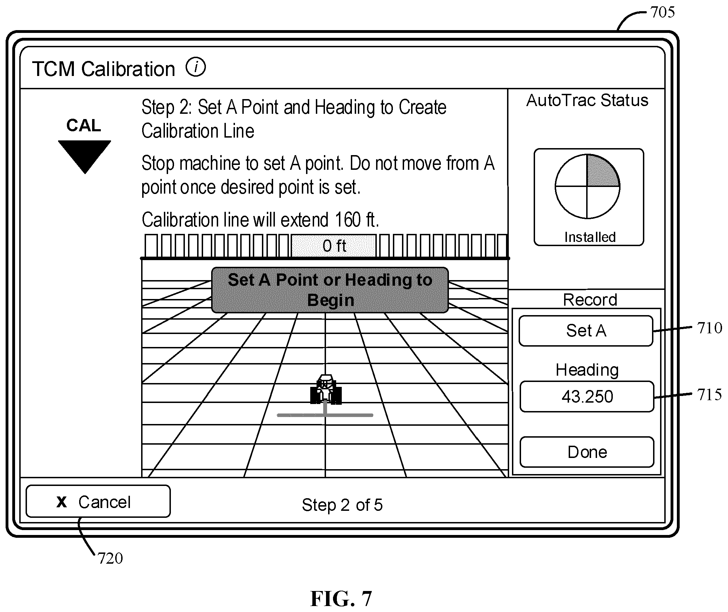

The display 610 includes a cancel button 620 and a next button 625. In some examples, the cancel button 620 ends calibration and the user interface 210 returns to the first display 510 of FIG. 5. In some examples, the next button 625 continues the calibration and the user interface 210 proceeds to the illustrated example of FIG. 7 described in further detail below. In some examples, the next button 625 initiates example software (e.g., AutoTrac) associated with the automated steerer 315 of the calibration path determiner 310. In some examples, the display 610 includes a status of the AutoTrac software as installed for the calibration process.

The illustrated example of FIG. 6B includes an example display 630 that includes more details for the input field 615 of FIG. 6A. The second display 530 includes information for the user to determine the turn radius for the machine (e.g., the machine 110 of FIG. 1). The display 630 includes the turn radius input field 635 that contains the value for the turn radius (e.g., 20 feet). The turn radius input field 635 includes a calculator to aid in determining the turn radius. The display 630 includes an example cancel button 640 and an example ok button 645. The cancel button 640 deletes the changes made to the turn radius input field 635 and the user interface 210 returns to the display 610 of FIG. 6A. In some examples, the ok button 645 applies the changes made in the turn radius input field 635 to the input field 615 of FIG. 6A, and the user interface 210 returns to the display 610 of FIG. 6A.

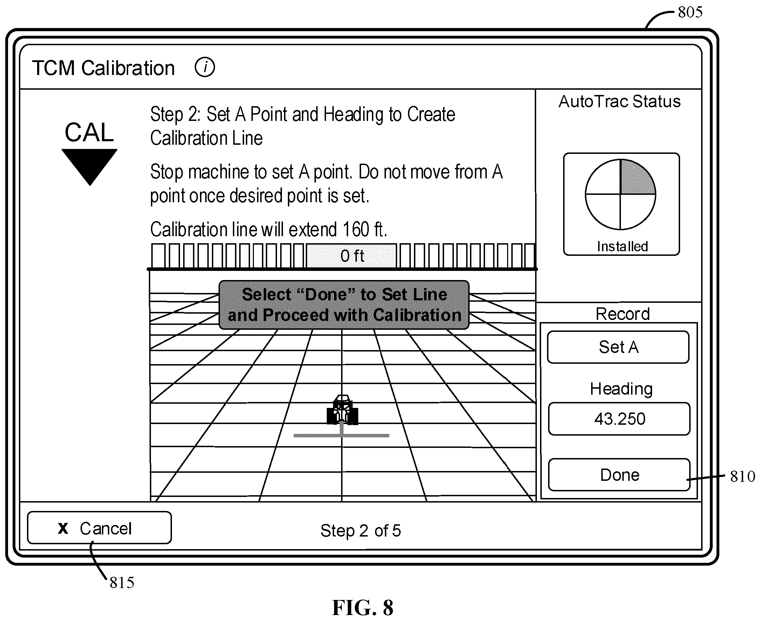

FIG. 7 is an illustration of the example user interface 210 included in the example IMU 125 of FIGS. 1 and/or 2 in conjunction with the example calibration path determiner 310 included in the example calibration determiner 215 of FIGS. 2 and/or 3 to obtain information for a calibration path. The illustrated example of FIG. 7 includes an example display 705 that identifies information needed to create the calibration line for the calibration path. The display 705 includes an example Set A field 710 and an example heading field 715. The Set A field 710 sets the starting point for the calibration line. The heading field 715 determines the heading for the machine (e.g., machine 110 of FIG. 1) to determine the direction of the calibration line. In some examples, if the heading field 715 does not receive user input for the heading value, the heading field 715 will update to match the current heading of the machine and display the current heading value. In some examples, when the Set A field 710 is selected, the starting point and heading value for the calibration line are set, and the user interface 210 proceeds to the illustrated example of FIG 8 further described below. In the illustrated example, the display 705 includes an example cancel button 720. In some examples, the cancel button 720 ends calibration and the user interface 210 returns to the first display 510 of FIG. 5.

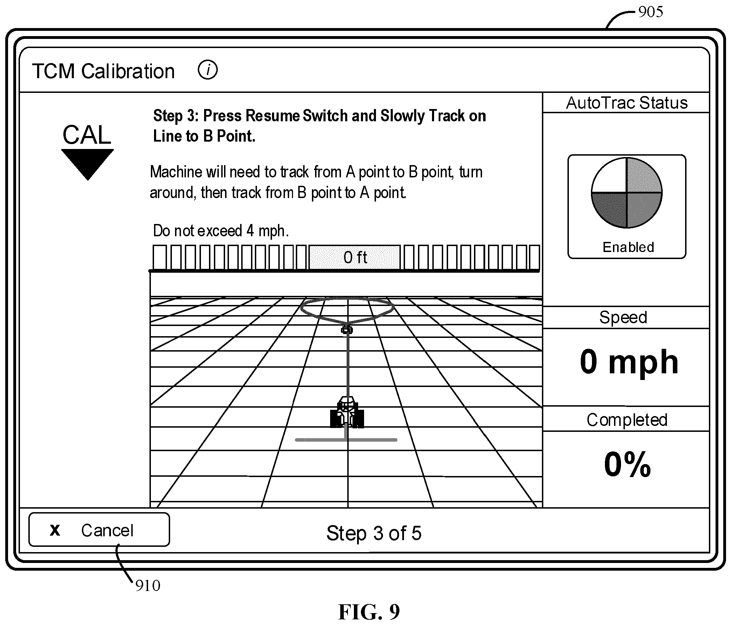

FIG. 8 is an illustration of the example user interface 210 included in the example IMU 125 of FIGS. 1 and/or 2 in conjunction with the example calibration path determiner 310 included in the example calibration determiner 215 of FIGS. 2 and/or 3 to determine a calibration path. The illustrated example of FIG. 8 includes an example display 805 that finalizes the calibration line. The display 805 includes a done button 815 that finalizes the starting point (Point A) and the heading value for the calibration line. In some examples, once the done button 815 is selected, the calibration path determiner 310 determines the path for the calibration line using the starting point and heading value. In some examples, the calibration path determiner 310 determines the placement of the turning point for the turning path once the starting point and heading value for the calibration line are set. In some examples, after the done button 815 is selected, the user interface 210 proceeds to the illustrated example of FIG. 9 described in further detail below. In the illustrated example, the display 805 includes an example cancel button 810. In some examples, the cancel button 810 ends calibration and the user interface 210 returns to the first display 510 of FIG. 5.

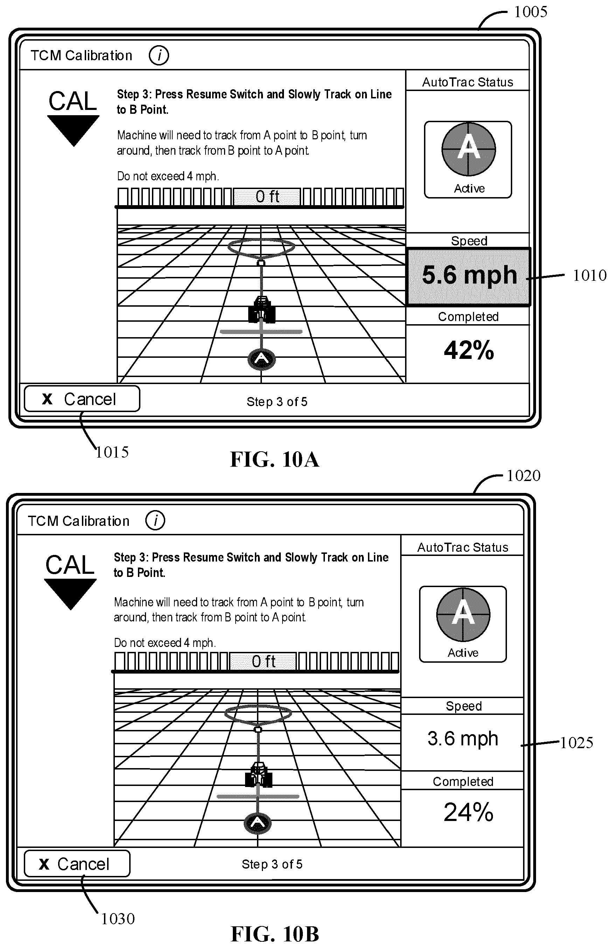

FIG. 9 is an illustration of the example user interface 210 included in the example IMU 125 of FIGS. 1 and/or 2 in conjunction with the automated steerer 315 included in the calibration determiner 215 of FIGS. 2 and/or 3 to follow a calibration path in a first direction. The illustrated example of FIG. 9 includes an example display 905 that illustrates the location progress of the machine (e.g., the machine 110 of FIG. 1) along the calibration line determined by the calibration path determiner 310. In some examples, the automated steerer 315 controls the steering of the machine to follow the calibration line from the starting point (Point A) to the turning point (Point B). In some examples, the user (operator) of the machine controls the speed of the machine as the automated steerer 315 controls the steering. Once the user begins applying speed (speed increases to over zero) to the machine, the user interface 210 proceeds to the illustrated examples of FIGS. 10A and 10B described in further detail below. In the illustrated example, the display 905 includes an example cancel button 910. In some examples, the cancel button 910 ends calibration and the user interface 210 returns to the first display 510 of FIG. 5.

FIGS. 10A, 10B are illustrations of the example user interface 210 included in the example IMU 125 of FIGS. 1 and/or 2 in conjunction with the example automated steerer 315 included in the example calibration determiner 215 of FIGS. 2 and/or 3 to monitor the speed of a machine on the calibration path. The illustrated example of FIG. 10A includes an example display 1005 to notify the user of the machine that the speed has increased over a threshold. The example display 1005 includes an example speed field 1010 that indicates when the speed of the machine increases over a threshold. In some examples, the automated steerer 315 alerts if the speed of the machine goes above a threshold speed. For example, the automated steerer 315 alerts the user if the speed of the machine 110 is above 6.43738 km/h (4 miles per hour (mph)). However, other speed thresholds may additionally and/or alternatively be used. In the illustrated example of FIG. 10A, the speed field 1010 alerts the user of the machine that the current speed of the machine (9.01233 km/h (5.6 mph)) is above the threshold speed (6.43738 km/h (4 mph)). In some examples, the speed field 1010 alerts the user of the machine until the current speed is no longer above the threshold. In the illustrated example, the display 1005 includes an example cancel button 1015. In some examples, the cancel button 1015 ends calibration and the user interface 210 returns to the first display 510 of FIG. 5.

The illustrated example of FIG. 10B includes an example display 1020 to notify the user of the machine that the speed has increased over a threshold. The example display 1020 includes an example speed field 1025 that indicates the speed of the machine is not above the threshold. In some examples, the automated steerer 315 monitors the speed of the machine to ensure the speed does not increase over the threshold. In the illustrated example of FIG. 10B, the speed field 1025 presents the user of the machine the current speed of the machine (3.6 mph) and does not alert that the current speed is above the threshold. In the illustrated example, the display 1020 includes an example cancel button 1030. In some examples, the cancel button 1030 ends calibration and the user interface 210 returns to the first display 510 of FIG. 5.

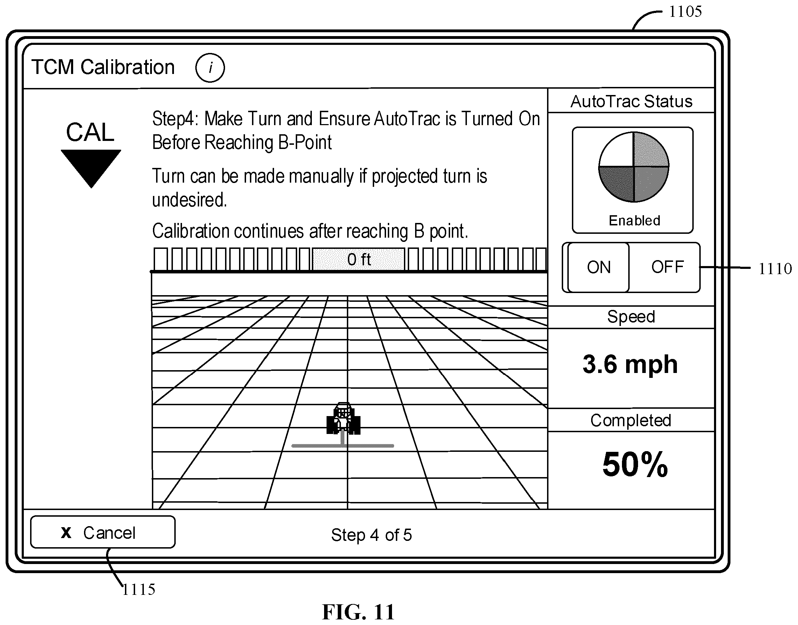

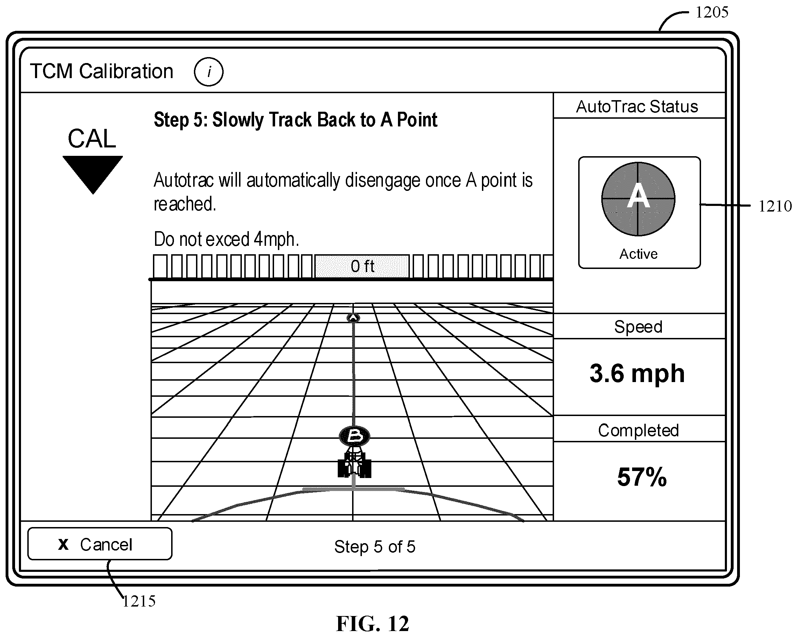

FIG. 11 is an illustration of the example user interface 210 included in the example IMU 125 of FIGS. 1 and/or 2 in conjunction with the example automated steerer 315 included in the example calibration determiner 215 of FIGS. 2 and/or 3 to follow a turning path. The illustrated example of FIG. 11 includes an example display 1105 that includes instructions for the turning path when the machine (e.g., the machine 110 of FIG. 1) reaches the turning point (Point B) on the calibration line. The display includes a toggle 1110 that controls if the automated steerer 315 will complete the turning path or if the user of the machine will complete the turning path. The toggle 1110 switches on and off to determine if the automated steerer 315 software (e.g., AutoTrac) is running for the turning path. If the toggle 1110 is set to on, the automated steerer 315 controls the steering for the machine while following the turning path. If the toggle 1110 is set to off, the user of the machine controls the steering for the matching while following the turning path. In some examples, the user of the machine controls the speed of the machine when the toggle is on and off. In the illustrated example, the display 1105 includes an example cancel button 1115. In some examples, the cancel button 1115 ends calibration and the user interface 210 returns to the first display 510 of FIG. 5. In some examples, when the machine returns to the turning point (Point B) after completing the turning path, the user interface 210 proceeds to the illustrated example of FIG. 12 described in further detail below.

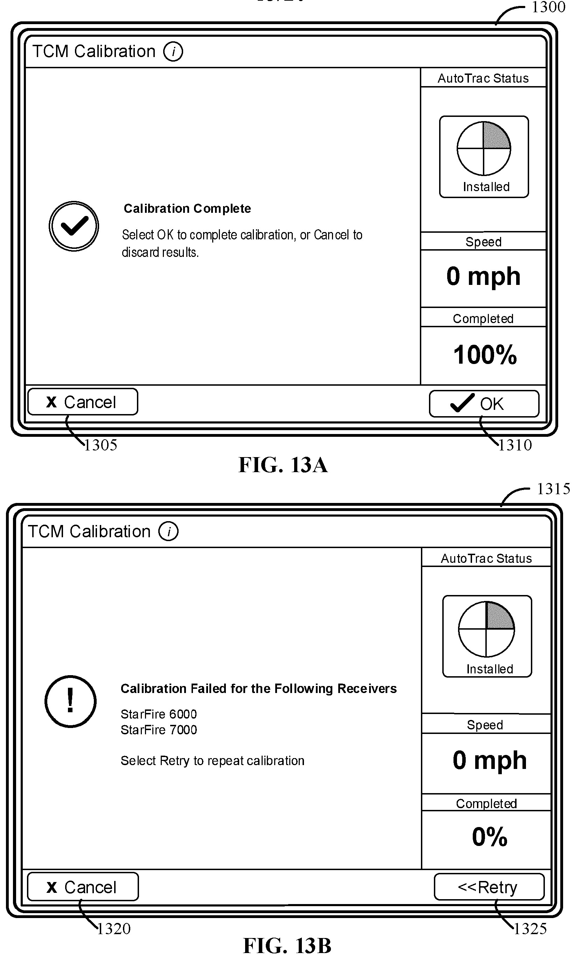

FIG. 12 is an illustration of the example user interface 210 included in the example IMU 125 of FIGS. 1 and/or 2 in conjunction with the example automated steerer 315 included in the example calibration determiner 215 of FIGS. 2 and/or 3 to follow a calibration path in a second direction. The illustrated example of FIG. 12 includes an example display 1205 that illustrates the location progress of the machine (e.g., the machine 110 of FIG. 1) along the calibration line determined by the calibration path determiner 310. The display 1205 includes an example status 1210 to indicate if the automated steerer 315 is controlling the steering (e.g., AutoTrac Status is active). In some examples when the user controls the steering of the machine during the turning path, once the turning point (Point B) is reached, the automated steerer 315 software (e.g., AutoTrac) switched to active to control the steering of the machine on the calibration line. In some examples, the automated steerer 315 controls the steering of the machine to follow the calibration line from the turning point back to the starting point (Point A). In some examples, the user (operator) of the machine controls the speed of the machine as the automated steerer 315 controls the steering. Once the machine returns to the starting point, the user interface 210 proceeds to the illustrated examples of FIGS. 13A and 13B described in further detail below. In the illustrated example, the display 1205 includes an example cancel button 1215. In some examples, the cancel button 1215 ends calibration and the user interface 210 returns to the first display 510 of FIG. 5.

FIGS. 13A, 13B are illustrations of the example user interface 210 included in the example IMU 125 of FIGS. 1 and/or 2 in conjunction with the example sensor calibrator 220 included in the example IMU 125 of FIGS. 1 and/or 2. The illustrated example of FIG. 13A includes an example display 1300 where the display 1300 includes information indicative of a successful calibration. In some examples, the sensor calibrator 220 determines the calibration was successful if the calibration determiner 215 was able to determiner calibration results for inertial sensors during the calibration. When the sensor calibrator 220 determines the calibration was successful, sensor calibrator 220 obtains to calibration results and the user interface 210 displays the display 1300 to indicate successful calibration. The display 1300 includes an example cancel button 1305 and an example ok button 1310. In some examples, the cancel button 1305 deletes the calibration results and the user interface 210 returns to the first display 510 of FIG. 5. In some examples, the ok button 1310 applies the calibration results to the IMU sensors module (e.g., IMU 125 of FIG. 1) of the GPS receivers and completes the calibration, and the user interface 210 returns to the first display 510 of FIG. 5.

The illustrated example of FIG. 13B includes an example display 1315 where the display 1315 includes information indicative of an unsuccessful calibration. In some examples, the sensor calibrator 220 determines the calibration was unsuccessful if the calibration determiner 215 was not able to determiner calibration results for the IMU (e.g. the IMU 125) during the calibration. When the sensor calibrator 220 determines the calibration was unsuccessful, the user interface 210 displays the display 1315 to indicate unsuccessful (e.g., Failed) calibration. The display 1315 includes an example cancel button 1320 and an example retry button 1325. In some examples, the cancel button 1320 ends the calibration and the user interface 210 returns to the first display 510 of FIG. 5. In some examples, the retry button 1325 restarts the calibration, and the user interface 210 returns to the second display 530 of FIG. 5 to begin calibration again.

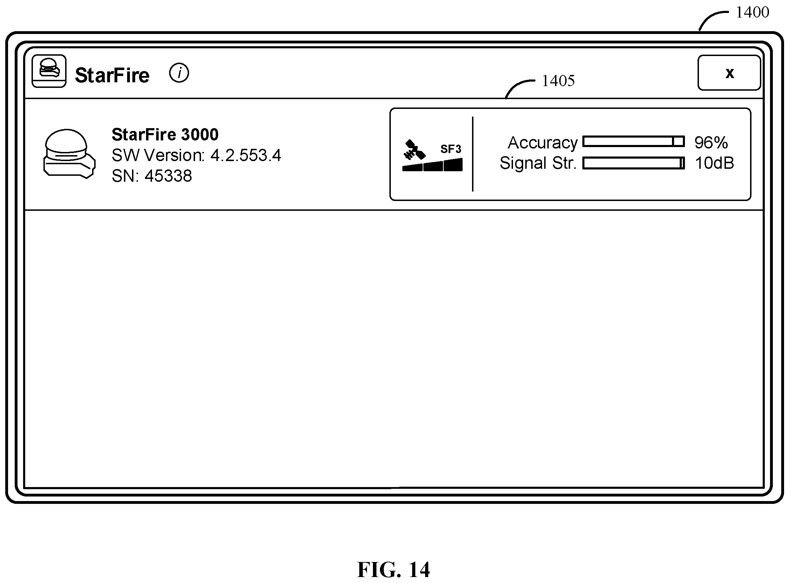

FIG. 14 is an illustration of the example user interface 210 included in the example IMU 125 of FIGS. 1 and/or 2 in conjunction with the example sensors interface 205 included in the IMU 125 of FIGS. 1 and/or 2. The illustrated example of FIG. 14 illustrates an example display 1400 that is indicative of a GPS receiver that is not compatible for calibration. In the illustrated example of FIG. 14, the user interface 210 displays the example display 1400 to the user of the machine 110. The example display 1400 includes an example entry 1405. The entry 1405 displays information about a GPS receiver (e.g., the GPS antenna 115 of FIG. 1) that is included on the machine 110. In some examples, the sensors interface 205 provides the information about the GPS receiver in the entry 1405. In some examples, the information displayed in the entry 1405 includes an accuracy measurement and signal strength for the GPS receiver. In some examples, the accuracy included in the entry 1405 indicates the accuracy of the inertial sensors associated with the GPS receiver. In the illustrated example of FIG. 14, the entry 1405 indicates that the GPS receiver does not have compatible software or hardware to perform the calibration of the inertial sensors. The entry 1405 does not include a visible calibration link and footer overlay, which indicates that compatible software or hardware is not detected.

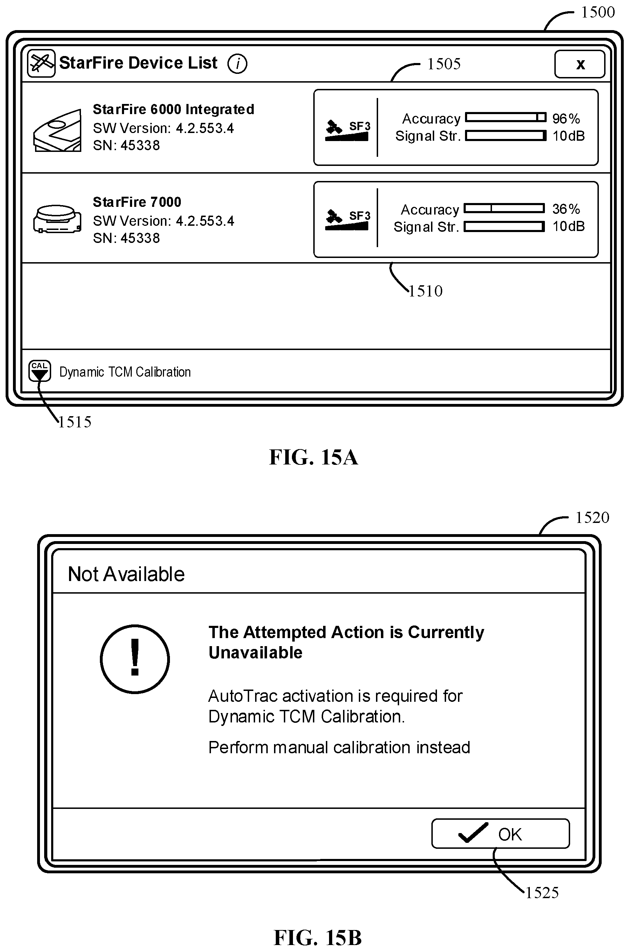

FIGS. 15A, 15B are illustrations of the example user interface 210 included in the example IMU 125 of FIGS. 1 and/or 2 in conjunction with the example sensors interface 205 included in the IMU 125 of FIGS. 1 and/or 2 to illustrate a selection for calibration with incompatible GPS receivers. The illustrated example of FIG. 15A includes an example display 1500 that includes an example first entry 1505 and an example second entry 1510. In the illustrated example, the first entry 1505 and the second entry 1510 are representative of different GPS devices (e.g., the machine 110 of FIG. 1) that are available to the IMU 125. In some examples, the first entry 1505 and the second entry 1510 include information (data) about the respective available GPS devices (e.g., identification information, accuracy, signal strength, etc.). The display 1500 further includes an example calibration menu button 1515. The calibration menu button 1515 provides a transition to the illustrated example of FIG. 15B described in further detail below.

The illustrated example of FIG. 15B includes an example display 1520 where the display 1520 includes information indicative of the calibration not being available for the GPS devices included in the display 1500 of FIG. 15A. In the illustrated example, if a GPS device (e.g., the machine 110 of FIG. 1) does not include the automated steerer 315 software (AutoTrac), the calibration is unable to start for the GPS device. In such examples, the user of the machine must manually calibration the GPS device. The display 1520 includes an example ok button 1525. In some examples, the ok button 1525 causes the user interface 210 to return to the display 1500 of FIG. 15A.

While an example manner of implementing the IMU 125 of FIG. 1 is illustrated in FIGS. 2 and 3, one or more of the elements, processes and/or devices illustrated in FIGS. 2 and 3 may be combined, divided, re-arranged, omitted, eliminated and/or implemented in any other way. Further, the example calibration determiner 215, the example sensor calibrator 220, the example calibration initiator 305, the example calibration path determiner 310, the example automated steerer 315, the example data recorder 320, the example sensor bias determiner 325 and/or, more generally, the example IMU 125 of FIG. 1 may be implemented by hardware, software, firmware and/or any combination of hardware, software and/or firmware. Thus, for example, any of the example calibration determiner 215, the example sensor calibrator 220, the example calibration initiator 305, the example calibration path determiner 310, the example automated steerer 315, the example data recorder 320, the example sensor bias determiner 325 and/or, more generally, the example IMU 125 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, calibration determiner 215, the example sensor calibrator 220, the example calibration initiator 305, the example calibration path determiner 310, the example automated steerer 315, the example data recorder 320, and/or the example sensor bias determiner 325 is/are hereby expressly defined to include a non-transitory computer readable storage device or storage disk such as a memory, a digital versatile disk (DVD), a compact disk (CD), a Blu-ray disk, etc. including the software and/or firmware. Further still, the example IMU 125 of FIG. 1 may include one or more elements, processes and/or devices in addition to, or instead of, those illustrated in FIGS. 2 and 3, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

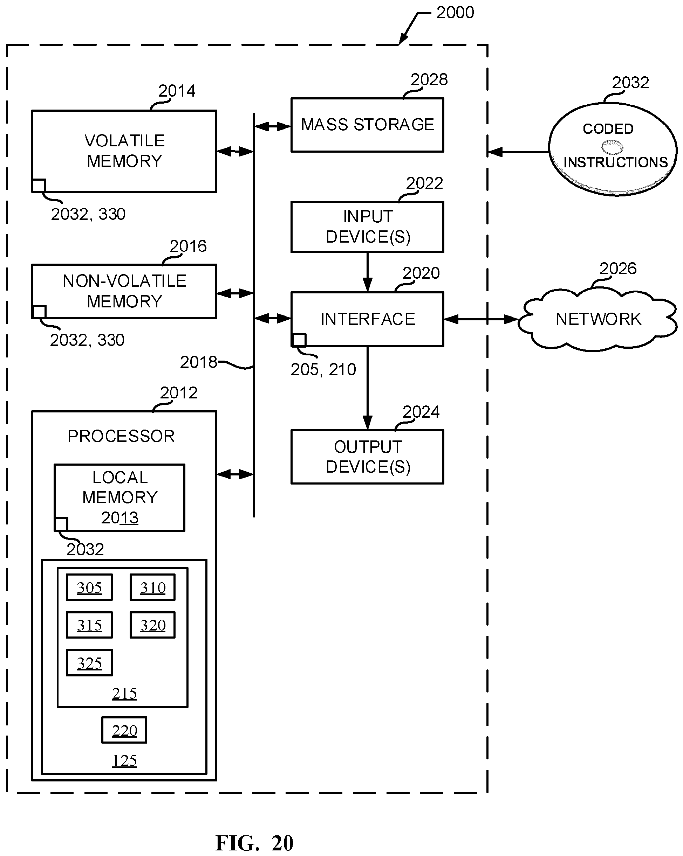

A flowchart representative of example hardware logic, machine readable instructions, hardware implemented state machines, and/or any combination thereof for implementing the IMU 125 of FIG. 1 is shown in FIGS. 2 and 3. The machine readable instructions may be one or more executable programs or portion(s) of an executable program for execution by a computer processor and/or processor circuitry, such as the processor 2012 shown in the example processor platform 2000 discussed below in connection with FIG. 20. The program may be embodied in software stored on a non-transitory computer readable storage medium such as a CD-ROM, a floppy disk, a hard drive, a DVD, a Blu-ray disk, or a memory associated with the processor 2012, but the entire program and/or parts thereof could alternatively be executed by a device other than the processor 2012 and/or embodied in firmware or dedicated hardware. Further, although the example program is described with reference to the flowchart illustrated in FIG. 4, many other methods of implementing the example IMU 125 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

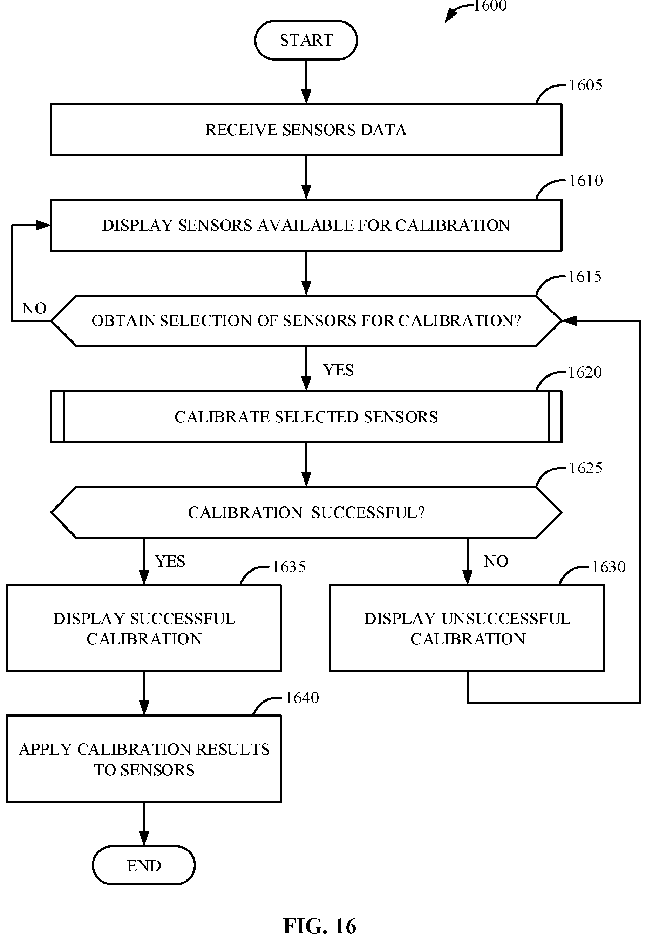

As mentioned above, the example processes of FIGS. 16, 17, 18, and 19 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 16 is a flowchart representative of machine readable instructions which may be executed to implement the example IMU 125 of FIGS. 1 and/or 2. The machine readable instructions of process 1600 may cause a processor to implement the example IMU 125. The program 1600 of FIG. 16 begins execution at block 1605 at which the sensors interface 205 receives the sensors data. The sensors interface obtains data from the inertial sensors of the IMU 125 of FIG. 1. In some examples, the sensors interface 205 receives the inertial sensors data such as, measurements from the inertial sensors, the types of the inertial sensors (e.g., accelerometer, gyroscope, magnetometer, etc.), the accuracy of the inertial sensors, etc. In some examples, the sensors interface 205 provides communication between the inertial sensors, the calibration determiner 215, and the sensor calibrator 220. The sensors interface 205 provides the inertial sensors data to the calibration determiner 215. The sensors interface 205 provides communication between the inertial sensors and the sensor calibrator 220 to apply the calibration results to the inertial sensors.

At block 1610, the example user interface 210 displays the sensors available for calibration. The user interface 210 displays information about the calibration of the inertial sensors to the user of the machine 110. For example, the user interface 210 displays the inertial sensors available for calibration. At block 1615, the user interface 210 determines if the user interface 210 obtains a selection of sensors for calibration. The user interface 210 determines if the user interface 210 obtains a selection of inertial sensors for calibration from the user of the machine 110 of FIG. 1. If the user interface 210 determines that user interface 210 obtains a selection of sensors for calibration, then process 1600 continues to block 1620 at which the calibration determiner 215 calibrates the selected sensors for calibration. If the user interface 210 determines that the user interface 210 does not obtain a selection of sensors for calibration, then process 1600 returns to block 1610 at which the user interface 210 displays the sensors available for calibration.

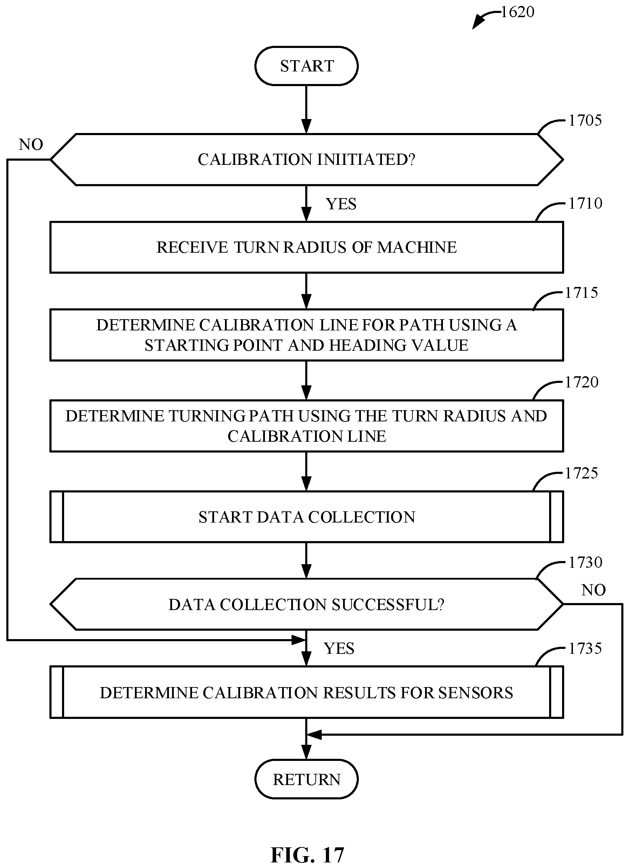

At block 1620, the calibration determiner 215 calibrates the selected sensors for calibration. The calibration determiner 215 calibrates the selected inertial sensors from the user interface 210. In some examples, the calibration determiner 215 obtains information needed to calibrate the inertial sensors from user input through the user interface 210. In some examples, the calibration determiner 215 provides calibration results to the sensor calibrator 220. As described in further detail below, the example flowchart 1620 of FIG. 17 represents example instructions that may be implemented to calibrate the selected sensors for calibration.

At block 1625, the example sensor calibrator 220 determines if the calibration was successful. In some examples, the sensor calibrator 220 determines if the calibration was successful based on if the sensor calibration 220 obtains calibration results from the calibration determiner 215. If the sensors calibration 220 obtains the calibration results for the inertial sensors from the calibration determiner 215, then the sensor calibrator 220 determines the calibration was successful. If the sensors calibration 220 does not obtain calibration results for the inertial sensors from the calibration determiner 215, then the sensor calibrator 220 determines the calibration was unsuccessful. If the sensor calibrator 220 determines the calibration was unsuccessful, then process 1600 continues to block 1630 at which the example user interface 210 displays an unsuccessful calibration. If the sensor calibrator 220 determines the calibration was successful, then process 1600 continues to block 1635 at which the example user interface 210 display a successful calibration.

At block 1630, the user interface 210 displays an unsuccessful calibration. For example, the user interface 210 displays an unsuccessful calibration message to the user of the machine 110. Once the user interface 210 displays an unsuccessful calibration, process 1600 returns to block 1615 at which the user interface 210 determines if the user interface 210 obtains a selection of sensors for calibration.

At block 1635, the user interface 210 displays a successful calibration. For example, the user interface 210 displays a successful calibration message to the user. At block 1640, the sensor calibrator 220 applies the calibration results to the sensors. In some examples, the calibration results include adjustments to be made to the measurements from the inertial sensors (e.g., error values to adjust the inertial sensor measurements). The sensor calibrator 220 applies the calibration results to the inertial sensors through the sensors interface 205. In some examples, the calibration results are provided to the GPS antenna 115 of FIG. 1. In such examples, the GPS antenna 115 applies the calibration results to the measurements from the inertial sensors. Once the sensor calibrator 220 applies the calibration results to the sensors, process 1600 ends.

FIG. 17 is a flowchart representative of machine readable instructions which may be executed to implement the example calibration determiner 215 of FIGS. 2 and/or 3. The machine readable instructions of process 1620 may cause the processor to implement the example calibration determiner 215. The program 1620 of FIG. 17 begins execution at block 1705 at which the example calibration initiator 305 determines if calibration is initiated. The calibration initiator 305 receives information from the user interface 210 that is indicative of a user selection of inertial sensors for calibration. The user selections of inertial sensors through the user interface 210 indicates to the calibration initiator 305 that calibration has been initiated. If the calibration initiator 305 determines calibration is initiated, then process 1620 continues to block 1710 at which the example calibration path determiner 310 receives a turn radius of a machine.

At block 1710, the calibration path determiner 310 receives a turn radius for a machine. In some examples, the calibration path determiner receives a turn radius for the machine 110 through the user interface 210. At block 1715, the example calibration path determiner 310 determines a calibration line for a path using a starting point and a heading value. In some examples, the calibration path determiner 310 receives a starting point and a heading value for the machine 110 through the user interface 210. In some examples, the calibration path determiner 310 uses baseline values for the turn radius and heading value if the calibration path determiner 310 does not receive user input from the user interface 210. The calibration path determiner 310 determines a calibration line for the calibration path using the starting point and heading value. In some examples, the calibration path determiner 310 determines the calibration line as a straight line of a set distance from the starting point in the direction of the heading for the machine 110. In some examples, the set distance is a distance required to collect inertial sensor measurements. For example, the set distance can be 48.768 m (160 feet), 60.96 m (200 feet), 80 meters, etc, etc. The calibration path determiner 310 sets the turning point at the end of the calibration line.

At block 1720, the example calibration path determiner 310 determines the turning path using the turn radius and the calibration line. The calibration path determiner 310 determines the turning path for the machine 110 based turn radius. In some examples, the calibration path determiner 310 determines the turning path to start and finish at the turning point while accounting for the turning radius of the machine 110.

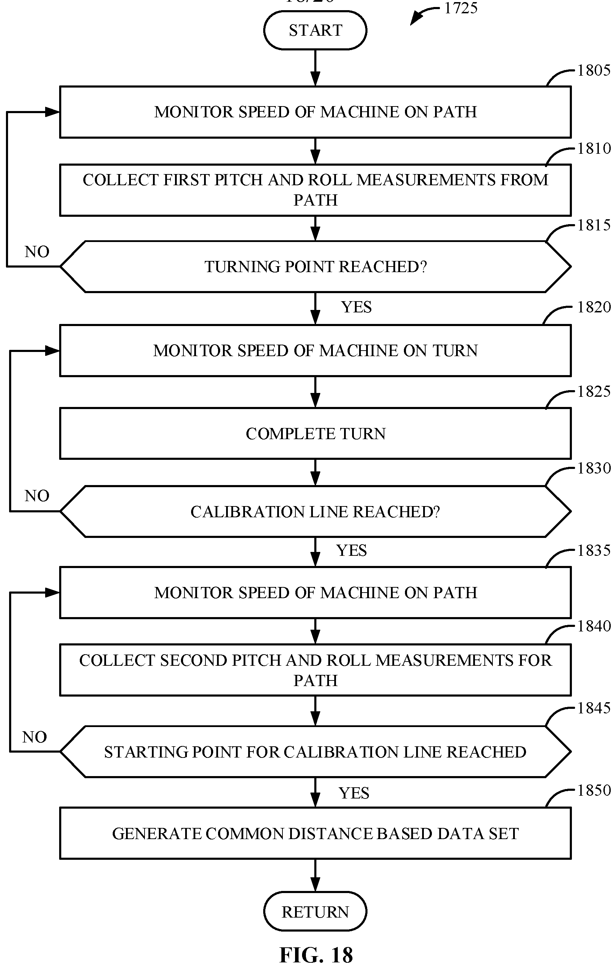

At block 1725, the data recorder 320 starts data collection. The data recorder 320 measures and collects the pitch and roll measurements of the inertial sensors while the automated steerer 315 follows the calibration line determined by the calibration path determiner 310. As describes in further detail below, the example flowchart 1725 of FIG. 18 represents example instructions that may be implemented to start data collection.

At block 1730, the sensor bias determiner 325 determines if data collection was successful. In some examples, the sensor bias determiner 325 determines if the data collection was successfully completed by the data recorder 320 when the automated steerer 315 indicates that the calibration path is complete. The sensor bias determiner 325 determines the data collection was successful when the sensor bias determiner 325 receives pitch and roll measurements from the data recorder 320 in the common distance based data set. The sensor bias determiner 325 determines the data collection was unsuccessful when the sensor bias determiner 325 does not receive pitch and roll measurements from the data recorder 320. If the sensor bias determiner 325 determines data collection was successful, then process 1620 continues to block 1735 at which the sensor bias determiner 325 determines calibration results for the sensors of the IMU 125 sensor module. If the sensor bias determiner 325 determines the data collection was not successful, then process 1620 completes and returns to process 1600 of FIG. 16.

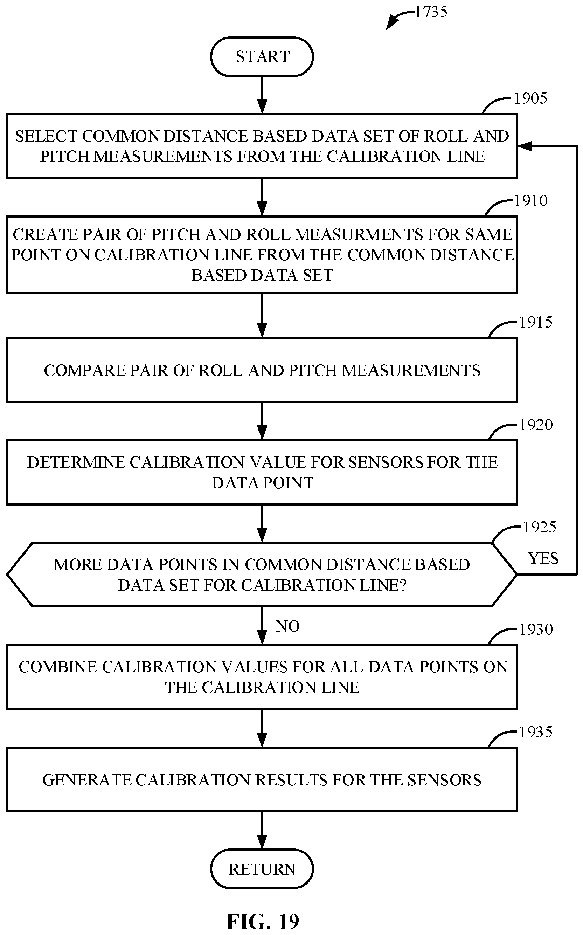

At block 1735, the sensor bias determiner 325 determines the calibration results for the sensors. The sensor bias determiner 325 of the illustrated example of FIG. 3 determines the calibration results for the inertial sensors based on the pitch and roll measurements collected and recorded by the data recorder 320. As described in further detail below, the example flowchart 1735 of FIG. 19 represents example instructions that may be implemented to determine calibration results for the sensors.

FIG. 18 is a flowchart representative of machine readable instructions which may be executed to implement the automated steerer 315 and the data recorder 320 included in the calibration determiner 215 of FIGS. 2 and/or 3. The machine readable instructions of process 1725 to implement the example sensor bias determiner 325. The program 1725 of FIG. 18 begins execution at block 1605 at which the example automated steerer 315 monitors the speed of the machine on the calibration path. In some examples, the automated steerer 315 does not control the speed of the machine 110 (e.g., the user of the machine 110 controls the speed). In some examples, the automated steerer 315 monitors the speed of the machine 110 along the calibration path. In some examples, the automated steerer 315 alerts if the speed of the machine goes above a threshold speed. For example, the automated steerer 315 alerts the user if the speed of the machine 110 is above 8.04672 km/h (5 miles per hour). However, other speed thresholds may additionally and/or alternatively be used. The automated steerer 315 controls the movement of the machine 110 to follow the calibration line from the starting point to the turning point.

At block 1810, the data recorder 320 collects first pitch and roll measurements from the calibration path. The data recorder 320 measures and collects the pitch and roll measurements of the inertial sensors while the automated steerer 315 follows the calibration line. The data recorder 320 collects and records pitch and roll measurements for the inertial sensors at a plurality of different locations along the calibration line from the starting point to the turning point. For example, the different locations can be every 30 cm (two feet) along the calibration line, every 2.54 cm (one inch) along the calibration line, etc. The data recorder 320 collects and records pitch roll measurements for the different locations when the automated steerer 315 directs the machine 110 from the starting point to the turning point.

At block 1815, the automated steerer 315 determines if the turning point is reached. If the automated steerer 315 determines the turning point has been reached, then process 1725 continues to block 1820 at which the automated steerer 315 monitors speed of the machine on the turning path. If the automated steerer 315 determines the turning point has not been reached, then process 1725 returns to block 1805 at which the automated steerer 315 monitors speed of the machine on the calibration path.

At block 1820, the automated steerer 315 monitors the speed of the machine 110 on the turn. In some examples, the automated steerer 315 alerts if the speed of the machine goes above a threshold speed. For example, the automated steerer 315 alerts the user if the speed of the machine 110 is above 8.04672 km/h (5 miles per hour). However, other speed thresholds may additionally and/or alternatively be used. At block 1825, the automated steerer 315 completes the turn. The automated steerer 315 completes the turning path while monitoring the speed of the machine 110. However, in some examples, the user of the machine 110 may select to manually complete the turn. In some examples, the data recorder 320 does not collect or record pitch and roll measurements during the turning path.

At block 1830, the automated steerer 315 determines if the calibration line is reached. The automated steerer 315 determines if the turning path is completed and the machine 110 is located at the turning point again. The automated steerer 315 determines that the calibration line is reached when the turning path is completed. If the automated steerer 315 determines the calibration line has been reached, then process 1725 continues to block 1825 at which the automated steerer 315 monitors the speed of the machine on the calibration path. If the automated steerer 315 determines the calibration line has not been reached, then process 1725 returns to block 1820 at which the automated steerer 315 monitors the speed of the machine on the turn.

At block 1835, the automated steerer 315 monitors the speed of the machine on the calibration path. In some examples, the automated steerer 315 alerts if the speed of the machine goes above a threshold speed. For example, the automated steerer 315 alerts the user if the speed of the machine 110 is above 8.04672 km/h (5 miles per hour). However, other speed thresholds may additionally and/or alternatively be used. The automated steerer 315 controls the movements of the machine 110 to follow the calibration line back from the turning point to the starting point.

At block 1840, the data recorder 320 collects second pitch and roll measurements for the path. The data recorder 320 collects and records pitch and roll measurements for the inertial sensors on the calibration line from the turning point to the starting point. The data recorder 320 collects and records the pitch and roll measurements at the plurality of different locations along the calibration line. For example, the different locations can be every 30 cm (two feet) along the calibration line, every 2.54 cm (one inch) along the calibration line, etc. The data recorder 320 collects and records pitch and roll measurements for the different locations when the automated steerer 315 directs the machine 110 from the turning point back to the starting point on the calibration line.

At block 1845, the automated steerer 315 determines if the starting point for the calibration line is reached. In some examples, once the machine 110 reaches the starting point, the automated steerer 315 indicates that the calibration path is complete to the example data recorder 320 and the sensor bias determiner 325. In some examples, the data recorder 320 stops collecting and recording pitch and roll measurements when the automated steerer 315 indicates that the starting point for the calibration line is reached. If the automated steerer 315 determines the starting point for the calibration line has been reached, then process 1725 continues to block 1850 at which the data recorder 320 generates a common distance based data set. If the automated steerer 315 determines the starting point for the calibration line has not been reached, then process 1725 returns to block 1835 at which the automated steerer 315 monitors the speed of the machine on the path.

At block 1850, the data recorder 320 generates a common distance based data set. In some examples, the data recorder 320 collects and records the pitch and roll measurements continuously for the different locations along the calibration line to generate a common distance based data set of the pitch and roll measurements. The data recorder 320 adjusts the pitch and roll measurements for offsets for the machine. The data recorder 320 adjusts the pitch measurements for offset differences between the center point between the front and rear wheels of the machine, and the data recorder 320 adjusted the roll measurements for the GPS to fixed axle offset for the machine. After the data recorder adjusts the pitch and roll measurements for offsets, the data recorder 320 interpolates the pitch and roll measurements into a common distance based data set. After the common distance based data set is generated, process 1725 completes and returns to process 1620 of FIG. 16.

FIG. 19 is a flowchart representative of machine readable instructions which may be executed to implement the example sensor bias determiner included in the example calibration determiner of FIGS. 2 and/or 3. The machine readable instructions of process 1735 to implement the example sensor bias determiner 325. The program 1735 of FIG. 18 begins execution at block 1905 at which the example sensor bias determiner 325 selects the common distance based data set of roll and pitch measurements from the calibration line. The common distance based data set includes the pitch and roll measurements collected when the automated steerer 315 directed the machine 110 from the starting point to the turning point, and from the turning point to the starting point on the calibration line.

At block 1910, the sensor bias determiner 325 creates a pair of pitch and roll measurements for the same point on the calibration line from the common distance based data set. The sensor bias determiner 325 selects two pitch and roll measurements from the common distance based data set for the same point on the calibration line, where the first selection is from when the automated steerer 315 directed the machine 110 from the starting point to the turning point, and the second selection is from when the automated steerer 315 directed the machine 110 from the turning point to the starting point on the calibration line. The sensor bias determiner 325 selects the two pitch and roll measurements as a pair of pitch and roll measurements.

At block 1915, the sensor bias determiner 325 compares the pair of roll and pitch measurements. The sensor bias determiner 325 compares the first selection of pitch and roll measurements with the second selection of pitch and roll measurements for each of the data points on the calibration line. As used herein, the data point on the calibration line refer to different locations along the calibration line. The first selection of pitch and roll measurements and the second selection of pitch and roll measurements were collected at the same data point on the calibration line, where the first selection was collected in the direction from the starting point to the turning point and the second selection was collected in the direction from the turning point to the starting point on the calibration line. At block 1920, the sensor bias determiner 325 determines calibration value for sensors for the data point on the calibration line. The sensor bias determiner 325 determines calibration values for the inertial sensors for each of the data points based on the comparison of the created pairs of pitch and roll measurements. In some examples, the calibration values are percent different calculations between the created pairs of pitch and roll measurements. However, other calculations for determining the calibration values from the comparison of the created pairs of pitch and roll measurements may additionally and/or alternatively be used.

At block 1925, the sensor bias determiner 325 determines if there are more data points on the calibration line. If the sensor bias determiner 325 determines there are more data points on the calibration line, then process 1735 returns to block 1905 at which the sensor bias determiner 325 selects the common distance based data set of roll and pitch measurements for a next point on the calibration line. If the sensor bias determiner 325 determines there are no more data points on the calibration line, then process 1735 continues to block 1930 at which the sensor bias determiner 325 combines the calibration values for all data points on the calibration line.

At block 1930, the sensor bias determiner 325 combines the calibration values of all data points on the calibration line. The sensor bias determiner 325 combines the calibration values for all of the created pairs of pitch and roll measurements for each of the inertial sensors of the IMU 125 sensor module. The sensor bias determiner 325 combines the calibration values by averaging the calibration values together. However, other calculation for combining the calibration values may additionally and/or alternatively be used.

At block 1935, the sensor bias determiner 325 generates calibration results for the inertial sensors. The sensor bias determiner 325 generates the calibration results for each of the inertial sensors of the IMU 125 sensor module based on the combined calibration values. In some examples, the sensor bias determiner 325 stores the calibration results for each of the inertial sensors in the calibration database 330. Once the sensor bias determiner 325 generates calibration results for the sensors, process 1735 completes and returns to process 1620 of FIG. 17.

FIG. 20 is a block diagram of an example processor platform 2000 structured to execute the instructions of FIGS. 16, 17, 18, and 19 to implement the IMU 125 of FIGS. 1 and/or 2 and the calibration determiner 215 of FIGS. 2 and/or 3. The processor platform 2000 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance a headset or other wearable device, or any other type of computing device.

The processor platform 2000 of the illustrated example includes a processor 2012. The processor 2012 of the illustrated example is hardware. For example, the processor 2012 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example calibration determiner 215, the example sensor calibrator 220, the example calibration initiator 305, the example calibration path determiner 310, the example automated steerer 315, the example data recorder 320, and the example sensor bias determiner 325.

The processor 2012 of the illustrated example includes a local memory 2013 (e.g., a cache). The processor 2012 of the illustrated example is in communication with a main memory including a volatile memory 2014 and a non-volatile memory 2016 via a bus 2018. The volatile memory 2014 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 2016 may be implemented by flash memory and/or any other desired type of memory device. Access to the main memory 2014, 2016 is controlled by a memory controller.

The processor platform 2000 of the illustrated example also includes an interface circuit 2020. The interface circuit 2020 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 2022 are connected to the interface circuit 2020. The input device(s) 2022 permit(s) a user to enter data and/or commands into the processor 2012. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 2024 are also connected to the interface circuit 2020 of the illustrated example. The output devices 2024 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 2020 of the illustrated example, thus, typically includes a graphics driver card, a graphics driver chip and/or a graphics driver processor.

The interface circuit 2020 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 2026. The communication can be via, for example, an Ethernet connection, a digital subscriber line (DSL) connection, a telephone line connection, a coaxial cable system, a satellite system, a line-of-site wireless system, a cellular telephone system, etc.

The processor platform 2000 of the illustrated example also includes one or more mass storage devices 2028 for storing software and/or data. Examples of such mass storage devices 2028 include floppy disk drives, hard drive disks, compact disk drives, Blu-ray disk drives, redundant array of independent disks (RAID) systems, and digital versatile disk (DVD) drives.

The machine executable instructions 2032 of FIGS. 16, 17, 18, and 19 may be stored in the mass storage device 2028, in the volatile memory 2014, in the non-volatile memory 2016, and/or on a removable non-transitory computer readable storage medium such as a CD or DVD.

From the foregoing, it will be appreciated that example methods, apparatus and articles of manufacture have been disclosed that automate the calibration of inertial sensors for a GPS. The disclosed examples use automated driving to ensure accurate roll and pitch measurements that are used to calibrate the inertial sensors. The disclosed examples collect two sets of roll and pitch measurements for the same locations along a prescribed calibration path to ensure there are measurements for the same terrain in two directions, and the two sets are interpolated into a common distance based data set. The disclosed examples automate the driving of a machine to ensure the machine follows the prescribed calibration path in the same way for both directions. The disclosed examples analyze many roll and pitch measurements (e.g., hundreds or thousands of pairs for the prescribed calibration path) from the common distance based data set to ensure a highly reliable and repeatable outcome is possible for calibrating the IMU sensor module. The disclosed examples improve the efficiency of using a computing device by improving the consistency in the roll and pitch measurement collected along the prescribed calibration path. The disclosed methods, apparatus and articles of manufacture are accordingly directed to one or more improvement(s) in the functioning of a computer.

## Claims

1. An apparatus to calibrate inertial sensors (125), the apparatus comprising:
a calibration path determiner (310) to determine a calibration path (400) for a machine (110, 405) to follow during calibration of the inertial sensors, the calibration path (400) including a first point (410) of the calibration path (400) and a second point (420) of the calibration path (400), the calibration path determiner (310) configured to receive a turn radius of the machine (110, 405) for a turning path (425) from a user interface (210), the turning path (425) included in the calibration path (400) after the second point (420) of the calibration path (400);
an automated steerer (315) to control steering of the machine (110, 405) based on signals on the calibration path (400) during the calibration of the inertial sensors, the automated steerer (315) configured to monitor the speed of the machine (110, 405) along the calibration path and to alert a user of the machine (110, 405) if the speed of the machine (110, 405), which is controlled by the user of the machine (100, 405), goes above a threshold speed;
a data recorder (320) configured to record pitch and roll measurements from the inertial sensors (125) as the machine (110, 405) follows the calibration path (400) between the first point (410) of the calibration path (400) and the second point (420) of the calibration path (400); the data recorder (320) configured to record the pitch and roll measurements at different locations along the calibration path (400) between the first point (410) of the calibration path (400) and the second point (420) of the calibration path (400) in a first direction and to record the pitch and roll measurements at the different locations along the calibration path (400) between the first point (410) of the calibration path (400) and the second point (420) of the calibration path (400) in a second direction, and wherein the data recorder (320) is to not record pitch and roll measurements during the turning path (425) after the second point (420) of the calibration path (400) and wherein the first direction is from the first point (410) of the calibration path (400) to the second point (420) of the calibration path (400) before the turning path (425), and the second direction is from the second point (420) of the calibration path (400) after completion of the turning path (425) to the first point (410) of the calibration path (420),
a sensor bias determiner (325) configured to determine calibration results for the inertial sensors by comparing the pitch and roll measurements from the first direction and the pitch and roll measurements from the second direction for each of the different locations; and
a sensor calibrator (220) configured to apply the calibration results to the inertial sensors through a sensor interface (205).

## Patentansprüche

1. Einrichtung, um Trägheitssensoren (125) zu kalibrieren, wobei die Einrichtung Folgendes umfasst:
einen Kalibrierungspfadbestimmer (310), um einen Kalibrierungspfad (400) für eine Maschine (110, 405) zu bestimmen, dem während der Kalibrierung der Trägheitssensoren zu folgen ist, wobei der Kalibrierungspfad (400) einen ersten Punkt (410) des Kalibrierungspfads (400) und einen zweiten Punkt (420) des Kalibrierungspfads (400) beinhaltet, wobei der Kalibrierungspfadbestimmer (310) dazu ausgelegt ist, einen Umkehrradius der Maschine (110, 405) für einen Wendepfad (425) von einer Benutzerschnittstelle (210) zu empfangen, wobei der Wendepfad (425) in dem Kalibrierungspfad (400) nach dem zweiten Punkt (420) des Kalibrierungspfads (400) enthalten ist;
einen automatisierten Lenker (315), um die Lenkung der Maschine (110, 405) basierend auf Signalen auf dem Kalibrierungspfad (400) während der Kalibrierung der Trägheitssensoren zu steuern, wobei der automatisierte Lenker (315) dazu ausgelegt ist, die Geschwindigkeit der Maschine (110, 405) entlang des Kalibrierungspfads zu überwachen und einen Benutzer der Maschine (110, 405) zu warnen, wenn die Geschwindigkeit der Maschine (110, 405), die durch den Benutzer der Maschine (100, 405) gesteuert wird, den Schwellenwert überschreitet;
einen Datenaufzeichner (320), der dazu ausgelegt ist, Neigungs- und Rollwinkelmessungen von den Trägheitssensoren (125) aufzuzeichnen, wenn die Maschine (110, 405) dem Kalibrierungspfad (400) zwischen dem ersten Punkt (410) des Kalibrierungspfads (400) und dem zweiten Punkt (420) des Kalibrierungspfads (400) folgt;
wobei der Datenaufzeichner (320), dazu ausgelegt ist, die Neigungs- und Rollwinkelmessungen an verschiedenen Orten entlang des Kalibrierungspfads (400) zwischen dem ersten Punkt (410) des Kalibrierungspfads (400) und dem zweiten Punkt (420) des Kalibrierungspfads (400) in einer ersten Richtung aufzuzeichnen und die Neigungs- und Rollwinkelmessungen an den verschiedenen Orten entlang des Kalibrierungspfads (400) zwischen dem ersten Punkt (410) des Kalibrierungspfads (400) und dem zweiten Punkt (420) des Kalibrierungspfads (400) in einer zweiten Richtung aufzuzeichnen, und wobei der Datenaufzeichner (320) Neigungs- und Rollwinkelmessungen während des Wendepfads (425) nach dem zweiten Punkt (420) des Kalibrierungspfads (400) nicht aufzeichnen soll und wobei die erste Richtung von dem ersten Punkt (410) des Kalibrierungspfads (400) zu dem zweiten Punkt (420) des Kalibrierungspfads (400) vor dem Wendepfad (425) ist, und die zweite Richtung von dem zweiten Punkt (420) des Kalibrierungspfads (400) nach Abschluss des Wendepfads (425) zu dem ersten Punkt (410) des Kalibrierungspfads (420) ist,
einen Sensorvorspannungsbestimmer (325), der dazu ausgelegt ist, Kalibrierungsergebnisse für die Trägheitssensoren durch Vergleichen der Neigungs- und Rollwinkelmessungen aus der ersten Richtung und der Neigungs- und Rollwinkelmessungen aus der zweiten Richtung für jeden der verschiedenen Orte zu bestimmen; und
einen Sensorkalibrierer (220), der dazu ausgelegt ist, die Kalibrierungsergebnisse über eine Sensorschnittstelle (205) auf die Trägheitssensoren anzuwenden.

## Revendications

1. Appareil pour étalonner des capteurs inertiels (125), l'appareil comprenant :
un dispositif de détermination de trajet d'étalonnage (310) pour déterminer un trajet d'étalonnage (400) pour une machine (110, 405) à suivre pendant l'étalonnage des capteurs inertiels, le trajet d'étalonnage (400) incluant un premier point (410) du trajet d'étalonnage (400) et un second point (420) du trajet d'étalonnage (400), le dispositif de détermination de trajet d'étalonnage (310) étant configuré pour recevoir un rayon de braquage de la machine (110, 405) pour un trajet en virage (425) en provenance d'une interface utilisateur (210), le trajet en virage (425) étant inclus dans le trajet d'étalonnage (400) après le second point (420) du trajet d'étalonnage (400) ;
un dispositif de direction automatisé (315) pour commander la direction de la machine (110, 405) sur la base de signaux sur le trajet d'étalonnage (400) pendant l'étalonnage des capteurs inertiels, le dispositif de direction automatisé (315) étant configuré pour surveiller la vitesse de la machine (110, 405) le long du trajet d'étalonnage et pour alerter un utilisateur de la machine (110, 405) si la vitesse de la machine (110, 405), qui est commandée par l'utilisateur de la machine (100, 405), dépasse une vitesse seuil ;
un dispositif d'enregistrement de données (320) configuré pour enregistrer des mesures de tangage et de roulis provenant des capteurs inertiels (125) lorsque la machine (110, 405) suit le trajet d'étalonnage (400) entre le premier point (410) du trajet d'étalonnage (400) et le second point (420) du trajet d'étalonnage (400) ;
le dispositif d'enregistrement de données (320) étant configuré pour enregistrer les mesures de tangage et de roulis au niveau de différents emplacements le long du trajet d'étalonnage (400) entre le premier point (410) du trajet d'étalonnage (400) et le second point (420) du trajet d'étalonnage (400) dans une première direction et pour enregistrer les mesures de tangage et de roulis au niveau des différents emplacements le long du trajet d'étalonnage (400) entre le premier point (410) du trajet d'étalonnage (400) et le second point (420) du trajet d'étalonnage (400) dans une seconde direction, et dans lequel le dispositif d'enregistrement de données (320) n'est pas destiné à enregistrer des mesures de tangage et de roulis pendant le trajet en virage (425) après le second point (420) du trajet d'étalonnage (400) et dans lequel la première direction va du premier point (410) du trajet d'étalonnage (400) au second point (420) du trajet d'étalonnage (400) avant le trajet en virage (425), et la seconde direction va du second point (420) du trajet d'étalonnage (400) après la réalisation du trajet en virage (425) au premier point (410) du trajet d'étalonnage (420),
un dispositif de détermination de biais de capteur (325) configuré pour déterminer des résultats d'étalonnage pour les capteurs inertiels en comparant les mesures de tangage et de roulis de la première direction et les mesures de tangage et de roulis de la seconde direction pour chacun des différents emplacements ; et
un dispositif d'étalonnage de capteur (220) configuré pour appliquer les résultats d'étalonnage aux capteurs inertiels par l'intermédiaire d'une interface de capteur (205).
